# EUROPEAN PATENT SPECIFICATION

(11) **EP 4 138 486 B1**
(45) Date of publication and mention of the grant of the patent: **26.08.2026**
(21) Application number: 21796937.7
(22) Date of filing: 04.03.2021
(51) Int. Cl.: H04B 5/00, H04W 52/02, H04B 7/12

(54) **BACKSCATTERING COMMUNICATION METHOD AND DEVICE**
RÜCKSTREUUNGSKOMMUNIKATIONSVERFAHREN UND -VORRICHTUNG
PROCÉDÉ ET DISPOSITIF DE COMMUNICATION PAR RÉTRODIFFUSION

(30) Priority: 26.04.2020 CN 202010340146
(43) Date of publication of application: 22.02.2023
(73) Proprietor: Huawei Technologies Co., Ltd., Longgang District, Shenzhen, Guangdong 518129 (CN)
(72) Inventor: WU, Tao, Shenzhen, Guangdong 518129 (CN); HOU, Xiaole, Shenzhen, Guangdong 518129 (CN)
(74) Representative: Gill Jennings & Every LLP
(86) International application number: PCT/CN2021/079147
(87) International publication number: WO 2021/218378

(56) References cited:
- EP-A2- 2 424 121
- WO-A1-2019/236679
- WO-A1-2019/236679
- CN-A- 105 139 047
- CN-A- 110 324 068
- CN-A- 110 932 739
- US-A1- 2018 234 161
- YASHA KARIMI ET AL: "Design of a backscatter-based Tag-to-Tag system", 2017 IEEE INTERNATIONAL CONFERENCE ON RFID (RFID), 1 January 2017 (2017-01-01), pages 6 - 12, XP055660480, ISBN: 978-1-5090-4576-1, DOI: 10.1109/RFID.2017.7945579
- RENJIE ZHAO ET AL: "OFDMA-Enabled Wi-Fi Backscatter", MOBILE COMPUTING AND NETWORKING, ACM, 2 PENN PLAZA, SUITE 701NEW YORKNY10121-0701USA, 7 August 2019 (2019-08-07), pages 1 - 15, XP058438004, ISBN: 978-1-4503-6169-9, DOI: 10.1145/3300061.3300121

## Description

### TECHNICAL FIELD

Embodiments of this application relate to the communication field, and in particular, to a backscatter communication method and a device.

### BACKGROUND

In an existing back reflection application scenario, a distance between a base station and a tag device is generally 20 meters to 30 meters. However, as back reflection application scenarios become diverse, the distance between the base station and the tag device gradually increases, for example, to 500 meters or 1 kilometer to meet communication requirements. In a long-distance communication scenario, due to a transmission bottleneck of the tag device or a limitation of external interference, an error rate of uplink signals reflected by the tag device and received by the base station may be relatively high. WO 2019/236679 A1 discloses methods for estimating characteristics of a wireless communication channel between at least two passive RF nodes.

### SUMMARY

This application provides a backscatter communication method and a device, to improve receiving accuracy of a network device to some extent.

To achieve the foregoing objectives, the following technical solutions are used in this application.

According to a first, second and third claimed aspects, embodiments of this application provide backscatter communication apparatuses and a method, as defined in the appended independent claims 1, 7 and 12. Further details are defined in the appended dependent claims.

Based on the foregoing manner, the uplink reflected signal generated based on the excitation signal having a phase-shift characteristic can be cyclically shifted in a frequency domain sequence. In this way, power corresponding to a symbol of the tag information received by the network device is increased, thereby improving signal transmission reliability and reception accuracy.

### BRIEF DESCRIPTION OF DRAWINGS

To describe technical solutions in embodiments of this application more clearly, the following briefly introduces accompanying drawings for describing embodiments of this application. It is clear that the accompanying drawings in the following description show merely some embodiments of this application, and a person of ordinary skill in the art may still derive other drawings from these accompanying drawings without creative efforts.
FIG. 1a is a schematic diagram of an application scenario according to an embodiment of this application;
FIG. 1b is a schematic diagram of an application scenario according to an embodiment of this application;
FIG. 2 is a schematic diagram of an example of a structure of a network device;
FIG. 3 is a schematic flowchart of an example of backscatter communication;
FIG. 4 is a schematic diagram of an example of a manner of generating an indication signal;
FIG. 5 is a schematic flowchart of backscatter communication;
FIG. 6 is a schematic diagram of an example of a structure of a tag device;
FIG. 7 is a schematic diagram of an example of a signal modulation scheme;
FIG. 8 is a schematic flowchart of a backscatter communication method according to an embodiment of this application;
FIG. 9 is a schematic diagram of an example of a second excitation sub-signal;
FIG. 10 is a schematic diagram of an example of a second excitation sub-signal;
FIG. 11 is a schematic diagram of an example of a second excitation sub-signal;
FIG. 12 is a schematic diagram of an example of a cyclic shift;
FIG. 13 is a schematic diagram of an example of a cyclic shift;
FIG. 14 is a schematic diagram of an example of a cyclic shift;
FIG. 15 is an example of an effect diagram;
FIG. 16 is a schematic flowchart of a backscatter communication method according to an embodiment of this application;
FIG. 17 is a schematic diagram of an example of an uplink reflected signal;
FIG. 18a is a schematic diagram of an example of generating a first uplink reflected sub-signal;
FIG. 18b is a schematic diagram of an example of generating a second uplink reflected sub-signal;
FIG. 19a is a schematic diagram of an example of a first frequency domain sequence;
FIG. 19b is a schematic diagram of an example of a second frequency domain sequence;
FIG. 20 is a schematic flowchart of a backscatter communication method according to an embodiment of this application;
FIG. 21a is a schematic diagram of an example of generating a first uplink reflected sub-signal;
FIG. 21b is a schematic diagram of an example of generating a second uplink reflected sub-signal;
FIG. 22a is a schematic diagram of an example of a first frequency domain sequence;
FIG. 22b is a schematic diagram of an example of a second frequency domain sequence;
FIG. 23 is a schematic flowchart of a backscatter communication method according to an embodiment of this application;
FIG. 24a is a schematic diagram of an example of generating a first uplink reflected sub-signal;
FIG. 24b is a schematic diagram of an example of generating a second uplink reflected sub-signal;
FIG. 25a is a schematic diagram of an example of a first frequency domain sequence;
FIG. 25b is a schematic diagram of an example of a second frequency domain sequence;
FIG. 26 is a schematic diagram of an example of a plurality of retransmissions;
FIG. 27 is a schematic diagram of a structure of a network device according to an embodiment of this application;
FIG. 28 is a schematic diagram of a structure of a tag device according to an embodiment of this application;
FIG. 29 is a schematic diagram of a structure of an apparatus according to an embodiment of this application; and
FIG. 30 is a schematic diagram of a structure of a chip according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that there may be three relationships. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used to distinguish between different target objects, but are not used to describe a particular order of the target objects.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In the description of the embodiment of this application, unless otherwise stated, "multiple" means two or more than two. For example, a plurality of processing units refer to two or more processing units, and a plurality of systems refer to two or more systems.

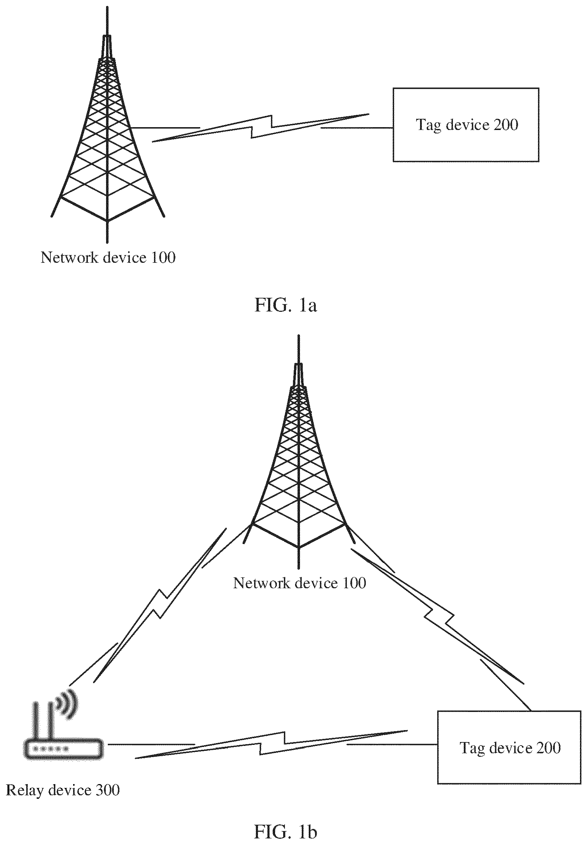

FIG. 1a is a schematic diagram of an application scenario according to an embodiment of this application. The application scenario includes a network device 100 and a tag device 200. FIG. 1b is a schematic diagram of another application scenario according to an embodiment of this application. The application scenario includes a network device 100, a relay device 300, and a tag device 200. It should be noted that, in actual application, there may be one or more network devices, tag devices, and relay devices. A quantity of devices in the communication system shown in FIG. 1 is merely an adaptive example. This is not limited in this application.

Specifically, the network device in FIG. 1a and FIG. 1b is an apparatus having a wireless communication function. The apparatus may send a radio frequency signal to the tag device, and receive a radio frequency signal returned by the tag device. The apparatus may be collectively referred to as the network device.

Optionally, in embodiments of this application, the network device may be an access point, and is mainly deployed at home, inside a building, and inside a campus. A typical coverage radius is tens of meters to hundreds of meters. Certainly, the network device may also be deployed outdoors. The access point is equivalent to a bridge that connects the wired network and the wireless network. A main function of the access point is to connect various wireless network clients together and then connect the wireless network to the Ethernet.

Specifically, the access point may be a terminal device (such as a mobile phone) or a network device (such as a router) with a wireless fidelity (wireless fidelity, Wi-Fi) chip. The access point may be a device that supports the 802.11be standard. The access point may also be a device that supports multiple wireless local area network (wireless local area networks, WLAN) standards of 802.11 families such as 802.11be, 802.11ax, 802.11ac, 802.11n, 802.11g, 802.11b, and 802.11a.

For example, the access point and the tag device may be devices used in the Internet of vehicles, Internet of things nodes or sensors in the Internet of things (Internet of things, IoT), smart cameras, smart remote controls, and smart water meters in a smart home, and sensors in a smart city.

Aspects of this application may be extended to other networks that use various standards or protocols, for example, Bluetooth (Bluetooth), a high performance radio LAN (high performance radio LAN, HIPERLAN) (a wireless standard that is similar to the IEEE 802.1 1 standard and that is mainly used in Europe) and a wide area network (WAN), a wireless local area network (wireless local area network, WLAN), a personal area network (personal area network, PAN), or another now known or later developed network. Therefore, the various aspects provided in this application are applicable to any suitable wireless network regardless of coverage and a wireless access protocol.

Optionally, in this embodiment of this application, the network device may alternatively be a base station in a fifth-generation 5G communication system, a base station in a future communication system, or the like.

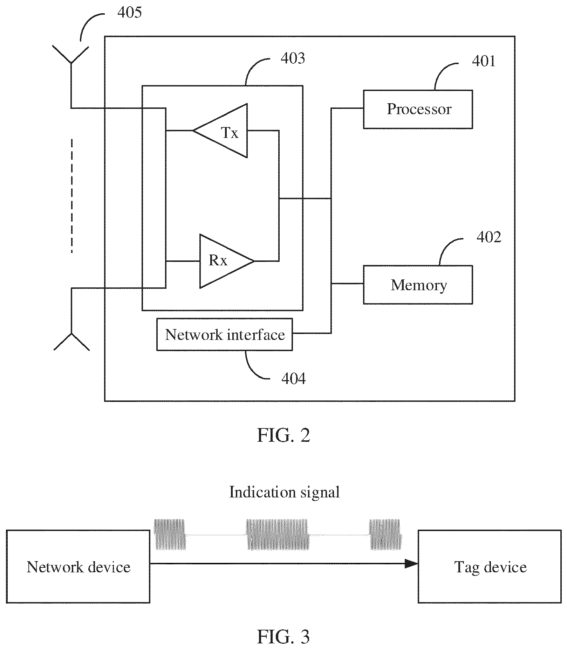

For example, FIG. 2 shows a schematic diagram of a structure when the network device is a base station. Refer to FIG. 2. The base station 400 includes at least one processor 401, at least one memory 402, at least one transceiver 403, at least one network interface 404, and one or more antennas 405. The processor 401, the memory 402, the transceiver 403, and the network interface 404 are connected, for example, by using a bus. The antenna 405 is connected to the transceiver 403. The network interface 404 is configured to enable the base station to be connected to another communication device through a communication link. In this embodiment of this application, the connection may include various types of interfaces, transmission lines, buses, or the like. This is not limited in this embodiment.

In this embodiment of this application, the processor such as the processor 401 may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logical operation. For example, the processor 401 may be a single-core (single-CPU) processor or a multi-core (multi-CPU) processor. The at least one processor 401 may be integrated in one chip or located in a plurality of different chips.

In this embodiment of this application, the memory such as the memory 402 may include at least one of the following types: a read-only memory (read-only memory, ROM), another type of static storage device that can store static information and instructions, a random access memory (random access memory, RAM), or another type of dynamic storage device that can store information and instructions, or may be an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed to a computer. However, the memory is not limited thereto.

The memory 402 may exist independently, and is connected to the processor 401. Optionally, the memory 402 may alternatively be integrated with the processor 401, for example, integrated into one chip. The memory 402 can store program code for performing the technical solutions in embodiments of this application, and the processor 401 controls execution of the program code. Various types of executed computer program code may also be considered as drivers of the processor 401. For example, the processor 401 is configured to execute the computer program code stored in the memory 402, to implement the technical solutions in embodiments of this application. Optionally, the memory 402 may be located outside a chip, and is connected to the processor 401 through an interface.

The transceiver 403 may be configured to support receiving or sending of a radio frequency signal between the base station and the tag device, and the transceiver 403 may be connected to the antenna 405. The transceiver 403 includes a transmitter Tx and a receiver Rx. Specifically, the one or more antennas 405 may receive a radio frequency signal. Specifically, one or more antennas 405 may be used to receive a radio frequency signal, for example, an uplink reflected signal sent by the tag device 200. The receiver Rx of the transceiver 403 is configured to receive the radio frequency signal via the antenna, convert the radio frequency signal into a digital baseband signal or a digital intermediate frequency signal, and provide the digital baseband signal or the digital intermediate frequency signal to the processor 401, so that the processor 401 further processes the digital baseband signal or the digital intermediate frequency signal, for example, performs demodulation processing and decoding processing. In addition, the transmitter Tx in the transceiver 403 is further configured to: receive a modulated digital baseband signal or digital intermediate frequency signal from the processor 401, convert the modulated digital baseband signal or digital intermediate frequency signal into a radio frequency signal, and send the radio frequency signal through the one or more antennas 405, for example, an indication signal and an excitation signal in embodiments of this application. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as digital signals.

In this application, the apparatus for implementing the foregoing method embodiments may be a chip or a processing system. For example, the apparatus may include only some components shown in FIG. 2, for example, include only the processor 401. The processor 401 is coupled to the memory 402, so that the apparatus on which the chip or the processing system is installed performs the method in embodiments of this application.

Optionally, the apparatus for implementing the foregoing method embodiment may alternatively be an entire device, for example, including a processor 401, a transceiver 403, and a memory 402. Optionally, the network device may further include an input/output device, for example, a display screen or a keyboard.

To enable a person skilled in the art to better understand the technical solutions in embodiments of this application, the following briefly describes a backscatter communication manner in the conventional technology with reference to FIG. 1a.

The backscatter technology is a technology applicable to a low-cost and low-power system. Different from a terminal in a conventional communication technology, a tag device in the backscatter technology cannot generate a radio frequency signal. The tag device sends tag information by modulating a radio frequency signal in an environment. For example, the radio frequency signal in the environment includes a radio television signal, a broadcast signal, a signal sent by a mobile communication station, a signal sent by a router, a signal sent by a dedicated card reader, and the like.

Specifically, as shown in FIG. 3, a network device (for example, the network device 100) sends an indication signal to a tag device (for example, the tag device 200), where the indication signal carries indication information for indicating the tag device to send (or, referred to as reflect) a reflected uplink signal based on an excitation signal. The indication signal is obtained by modulating a carrier signal by the network device based on the indication information.

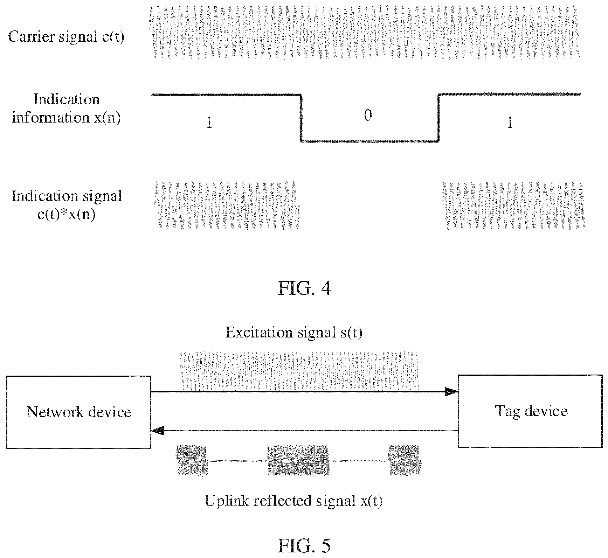

For example, FIG. 4 is a schematic diagram of a manner of generating an indication signal. Specifically, the network device generates a carrier signal c(t), where the carrier signal is a sine wave signal. Then, the network device may modulate the carrier signal based on indication information *x*(*n*) to be sent, to obtain the indication signal. For example, OOK (On-Off Keying, binary on-off keying) modulation is used as an example. It is assumed that the indication information is [1, 0, 1]. The indication signal is obtained by multiplying the carrier *c*(*t*) signal by the indication information [1, 0, 1], and may be represented as *c*(*t*)**x*(*n*)*.*

After receiving the indication signal, the tag device determines that tag information needs to be fed back to the network device. As described above, the tag device itself cannot generate a radio frequency signal, and can feed back tag information to the network device only by modulating the excitation signal sent by the network device.

Specifically, as shown in FIG. 5, after sending the indication signal, the network device may send the excitation signal s(t) to the tag device.

After receiving the excitation signal, the tag device may modulate the excitation signal s(t) based on the tag information to be sent, to obtain an uplink reflected signal x(t), and send the uplink reflected signal x(t) to the network device.

The following describes in detail a backscatter principle of the tag device. Specifically:

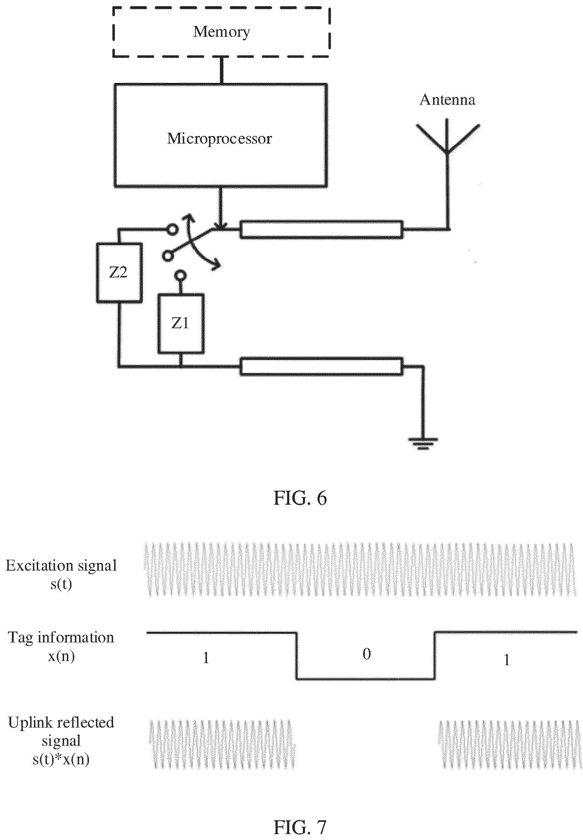

FIG. 6 is an example of a schematic diagram of a structure of a tag device. The tag device in FIG. 6 includes an antenna and a plurality of loads, for example, a load Z1 and a load Z2 in FIG. 6. Optionally, the tag device further includes a microprocessor, configured to control the antenna to be connected to different loads, to generate an uplink reflected signal. Optionally, the tag device may further include a memory. The memory may exist independently and connect to a microprocessor. Optionally, the memory and the microprocessor may be integrated, for example, integrated into a chip. The memory may be configured to store program instructions. When the program instructions are executed by the microprocessor, the microprocessor may control the tag device to perform the method in this application. The memory may be further configured to store tag information in this application. The microprocessor may modulate, based on the tag information in the memory, an excitation signal received by using the antenna.

OOK modulation is used as an example. It is assumed that an excitation signal received by the tag device via the antenna is s(t), and a generated uplink reflected signal is x(t). A relationship between the excitation signal and the uplink reflected signal may be expressed as follows: $x \left(t\right) = Γ s \left(t\right)$
Γ is a reflection coefficient, and may be represented as $Γ = \frac{{Z}_{i} - {Za}^{∗}}{{Z}_{i} + Za}$. *Z_{α}* is impedance of the antenna, and is generally 50 Ω. *Zᵢ* is matched impedance when the tag device is in an *i*th state, for example, *Z*₁ and *Z*₂ in FIG. 6.

Based on the foregoing assumption, the tag device may send signals "0" and "1" in the following manner.

If the tag device needs to send a signal "0", the tag device may select ${Z}_{i} = {Z}_{a}^{∗}$, and the reflection coefficient Γ = 0, so that energy of the excitation signal is absorbed. In this case, the tag device does not send a signal, which may be understood as that the tag device is in an absorbing state, or referred to as an OFF state.

If the tag device needs to send a signal "1", the tag device may select ${Z}_{i} \neq {Z}_{a}^{∗}$, and a reflection coefficient Γ ≠ 0, so that energy of the excitation signal is reflected. In this case, the tag device sends a signal, which may be understood as that the tag device is in a reflective state, or referred to as an ON state.

A modulation mode shown in FIG. 7 is used as an example. Specifically, tag information to be sent by the tag device is x(n), an excitation signal received by the tag device is *s*(*t*), and the excitation signal *s*(*t*) is a sine wave signal. For example, it is assumed that the tag information is [1, 0, 1], the tag device may generate an uplink reflected signal x(t) by changing an impedance matching state of the antenna based on a modulation symbol in the tag information, that is, by controlling different loads connected to the antenna. The uplink reflected signal x(t) may be expressed as: $x \left(t\right) = s \left(t\right) \times x \left(n\right)$

In a conventional backscatter communication system, a distance between a network device and a tag device is usually 20 meters to 30 meters. However, with evolution of the backscatter communication system and a change in requirements, a requirement for a transmission distance between the network device and the tag device gradually increases. For example, the transmission distance increases to 500 meters or 1 kilometer. In a scenario in which the transmission distance increases, due to limiting factors such as power and power consumption of the tag device, the network device cannot receive an uplink reflected signal x(t) sent by the tag device, or a signal receiving error rate is high.

To solve the foregoing problem, the current technology proposes a retransmission manner, which may alternatively be referred to as a repetition coding manner. In this manner, tag information is repeatedly sent, to improve a receiving success rate. However, improvement effect of this manner is limited, and a specific reason is described in detail in the following embodiment.

For a problem in the current technology, this application provides a backscatter communication method. A network device sends an excitation signal having a phase-shift characteristic to a tag device. When the tag device repeatedly sends tag information, a signal part corresponding to the repeatedly sent tag information in an uplink reflected signal is cyclically shifted in frequency domain. The network device may receive, in a diversity reception manner, the uplink reflected signal sent by the tag device, thereby improving a reception success rate.

In this application, based on different excitation signals *s*(*t*), manners of cyclic shifting, in frequency domain, of a signal part that is in an uplink reflected signal *x*(*t*) and that corresponds to repeatedly sent tag information are also different. In an example, a signal corresponding to the repeatedly sent tag information (hereinafter referred to as repeated tag information) in the uplink reflected signal *x*(*t*) may implement N/2 cyclic shift in frequency domain, where N is a quantity of modulated signals in the tag information. For specific details, refer to a scenario 2.

In another example, a signal corresponding to repeated tag information in the uplink reflected signal *x*(*t* ) may implement N/4 cyclic left shift in frequency domain. For specific details, refer to a scenario 3.

In yet another example, a signal corresponding to repeated tag information in the uplink reflected signal *x*(*t* ) may implement 3N/4 cyclic left shift in frequency domain. For specific details, refer to a scenario 4.

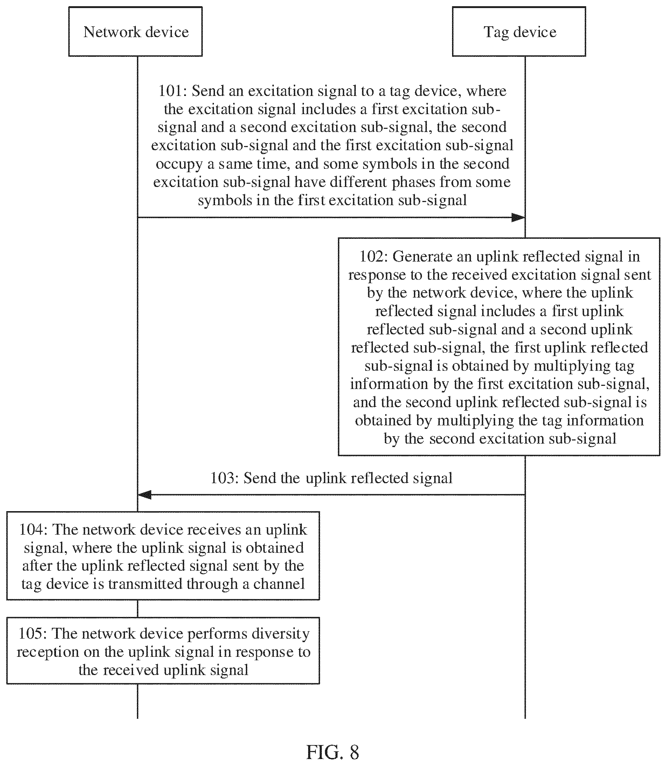

The following describes in detail a backscatter communication method in this application with reference to the communication system in FIG. 1a. FIG. 8 is a schematic flowchart of a backscatter communication method according to an embodiment of this application. In FIG. 8:

Step 101: A network device sends an excitation signal to a tag device, where the excitation signal includes a first excitation sub-signal and a second excitation sub-signal, the second excitation sub-signal and the first excitation sub-signal occupy a same time, and some symbols in the second excitation sub-signal have different phases from some symbols in the first excitation sub-signals.

Specifically, in this application, the network device (for example, the network device 100 in FIG. 1a) sends the excitation signal *s*(*t* ) to the tag device. A function of the excitation signal *s*(*t* ) is described above, so that the tag device may modulate the excitation signal *s*(*t* ) based on tag information *x*(*n*) , to generate an uplink reflected signal *x*(*t* ).

In this application, the excitation signal *s*(*t* ) includes the first excitation sub-signal *s*₁(*t* ) and the second excitation sub-signal *s*₂(*t* ). For example, the first excitation sub-signal *s*₁(*t* ) is a cosine wave signal, and may be expressed as: ${s}_{1} \left(t\right) = cos \left(2πf\left(t-nT\right)+{ϕ}_{0}\right)$ and
the second excitation sub-signal *s*₂(*t* ) may be expressed as: ${s}_{2} \left(t\right) = cos \left(2πf\left(t-nT\right)+{ϕ}_{0}+{ϕ}_{n}\right)$ where
T is a time length occupied by each modulation symbol in the tag information *x*(*n*) *,* N is a quantity of modulation symbols included in the tag information *x*(*n*) , n=0, ..., N-1, f is a carrier frequency, *ϕ*₀ is an initial phase, *ϕₙ* is a phase of the nth symbol of the second excitation sub-signal *s*₂(*t*), and t=(n-1)T, ..., nT.

The following describes the foregoing parameters in detail.

In this application, the tag information x(n) may include N modulation symbols, which may also be referred to as uplink modulation symbols. For example, the tag information x(n) may be [1, 0, 1, 1], where each number represents one modulation symbol. In other words, in this example, N=4.

For example, a time length corresponding to each modulation symbol in the tag information x(n) is T. In other words, a time length corresponding to the tag information x(n) is N*T. An example in which the tag information x(n) is [1, 0, 1, 1] is still used. In this example, the time length corresponding to the tag information x(n) is 4T.

In a possible implementation, the network device has learned in advance a quantity of modulation symbols included in tag information *x*(*n*) to be sent by the tag device each time. In other words, when sending the excitation signal *s*(*t* ), the network device may determine that a time length occupied by the first excitation sub-signal *s*₁(*t* ) and the second excitation sub-signal *s*₂(*t* ) is equal to the time length corresponding to the tag information *x*(*n*) , which is specifically a time length corresponding to all modulation symbols included in the tag information *x*(*n*) , namely, N*T.

For example, a manner in which the network device learns the length of the tag information *x*(*n*) in advance may be: The network device negotiates with the tag device in advance, or the network device and the tag device each are configured with a transmission length rule. For example, the quantity of modulation symbols included in the tag information *x*(*n*) transmitted by the tag device each time is four, in other words, N=4. A specific occupied time length may be set based on an actual situation. This is not limited in this application.

In this application, the carrier frequency f and the initial phase *ϕ*₀ may be set based on an actual requirement. This is not limited in this application.

In this application, *ϕₙ* is the phase of the nth symbol of the second excitation sub-signal *s*₂(*t*). In other words, based on different values of *ϕₙ*, a symbol of the second excitation sub-signal *s*₂(*t*) changes with the value of *ϕₙ*, so that some symbols in the second excitation sub-signal *s*₂(*t*) have different phases from some symbols in the first excitation sub-signals *s*₁(*t*).

Optionally, the second excitation sub-signal *s*₂(*t* ) may also be understood as being obtained by multiplying the first excitation sub-signal *s*₁(*t* ) by a phase-shifted signal, so that polarities of some sequences in a phase sequence corresponding to the second excitation sub-signal *s*₂(*t* ) are opposite to some sequences in a phase sequence corresponding to the first excitation sub-signal *s*₁(*t* ).

For example, it is assumed that the phase sequence corresponding to the first excitation sub-signal *s*₁(*t* ) is [1, 1, 1, 1], and the phase sequence corresponding to the second excitation sub-signal *s*₂(*t* ) is [1, -1, 1, - 1]. In this example, the second excitation sub-signal *s*₂(*t* ) may be considered as obtained by multiplying the first excitation sub-signal *s*₁(*t* ) by the phase-shift signal. A phase sequence corresponding to the phase-shift signal is [1, -1, 1, -1], so that a phase corresponding to an odd number symbol of the second excitation sub-signal *s*₂(*t* ) is opposite to a phase corresponding to an odd number symbol of the first excitation sub-signal *s*₁(*t* ). It may also be understood as that an odd number polarity of the phase sequence corresponding to the second excitation sub-signal *s*₂(*t* ) is opposite to an odd number polarity of the phase sequence of the first excitation sub-signal *s*₁(*t* ).

The following specifically describes the different values of *ϕₙ*.

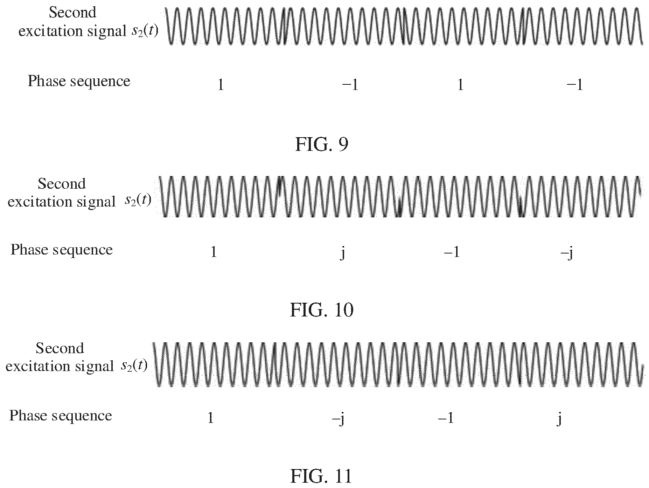

In an example, when n in the second excitation sub-signal *s*₂(*t*) is an even number, *ϕₙ* = 0, and when n is an odd number, *ϕₙ* = *π*. Alternatively, when n in the second excitation sub-signal *s*₂(*t*) is an even number, *ϕₙ* = *π*, and when n is an odd number, *ϕₙ* =0. In this example, the phase sequence corresponding to the second excitation sub-signal *s*₂(*t*) is [1, -1, ..., 1, -1]. It may be understood that the second excitation sub-signal *s*₂(*t*) is obtained by multiplying the first excitation sub-signal s₁(*t*) by a phase-shift signal whose phase sequence is [1, - 1, ..., 1, -1]. For example, the second excitation sub-signal *s*₂(*t* ) includes four symbols. For example, the second excitation sub-signal *s*₂(*t* ) is shown in FIG. 9, and the corresponding phase sequence is [1, -1, 1, -1]. Correspondingly, N/2 cyclic shift of a second uplink reflected sub-signal *x*₂(*t* ) generated based on the second excitation sub-signal *s*₂(*t* ) is implemented in frequency domain. Specific details are described in detail in a scenario 2.

In another example, in the second excitation sub-signal *s*₂(*t*), when n=4k, *ϕₙ* =0, when n=4k+1, ${ϕ}_{n} = \frac{π}{2}$, when n=4k+2, *ϕₙ* = *π*, and when n=4k+3, ${ϕ}_{n} = \frac{3 π}{2}$. In this example, the phase sequence corresponding to the second excitation sub-signal *s*₂(*t*) is [1, j, -1, -j, ..., 1, j, -1, -j]. It may be understood that the second excitation sub-signal *s*₂(*t*) is obtained by multiplying the first excitation sub-signal *s*₁(*t*) by a phase-shift signal whose phase sequence is [1, j, -1, -j, ..., 1, j, -1, -j], where a value of k is $0 , … , \frac{N}{4}$. For example, the second excitation sub-signal *s*₂(*t*) still includes four symbols. For example, the second excitation sub-signal *s*₂(*t*) is shown in FIG. 10, and the corresponding phase sequence is [1, j, -1, -j]. Correspondingly, N/4 left cyclic shift of a second uplink reflected sub-signal *x*₂(*t* ) generated based on the second excitation sub-signal *s*₂(*t* ) is implemented in frequency domain. Specific details are described in detail in a scenario 3.

In still another example, in the second excitation sub-signal *s*₂(*t*), when n=4k, *ϕₙ* = 0, when n=4k+1, ${ϕ}_{n} = \frac{3 π}{2}$, when n=4k+2, *ϕₙ* = *π*, and when n=4k+3, ${ϕ}_{n} = \frac{π}{2}$, where a value of k is $0 , … , \frac{N}{4}$. In this example, the phase sequence corresponding to the second excitation sub-signal *s*₂(*t*) is [1, -j, -1, j, ..., 1, -j, -1, j]. It may be understood that the second excitation sub-signal *s*₂(*t*) is obtained by multiplying the first excitation sub-signal *s*₁(*t*) by a phase-shift signal whose phase sequence is [1, -j, -1, j, ... 1, -j, -1, j]. For example, the second excitation sub-signal *s*₂(*t*) still includes four symbols. For example, the second excitation sub-signal *s*₂(*t*) is shown in FIG. 11, and the corresponding phase sequence is [1, -j, -1, j]. Correspondingly, 3N/4 left cyclic shift of a second uplink reflected sub-signal *x*₂(*t* ) generated based on the second excitation sub-signal *s*₂(*t*) is implemented in frequency domain. Specific details are described in detail in a scenario 4.

In a possible implementation, before step 101, the network device may send an indication signal to the tag device, to indicate the tag device to send the uplink reflected signal. For a manner of generating the indication signal, refer to the foregoing description. Details are not described herein again.

In another possible implementation, the network device may send one or more excitation signals, and phase-shift characteristics of second excitation signals in all the excitation signals may be the same or may be different. Correspondingly, the tag device may send a plurality of pieces of tag information based on the one or more excitation signals, where the plurality of pieces of tag information are different tag information.

Step 102: The tag device generates an uplink reflected signal in response to the received excitation signal sent by the network device, where the uplink reflected signal includes a first uplink reflected sub-signal and a second uplink reflected sub-signal, the first uplink reflected sub-signal is obtained by multiplying the tag information by the first excitation sub-signal, and the second uplink reflected sub-signal is obtained by multiplying the tag information by the second excitation sub-signal.

Specifically, in this application, the tag device receives the excitation signal *s*(*t* ) sent by the network device, and may modulate the excitation signal *s*(*t* ) based on the tag information that needs to be sent, to generate the uplink reflected signal *x*(*t* ) . The uplink reflected signal *x*(*t* ) carries the tag information *x*(*n*) and repeated tag information *x*(*n*) *.*

Specifically, to improve signal receiving accuracy, the tag device in this application repeatedly sends tag information. In this application, an example in which the tag information is repeatedly sent once, in other words, the tag device sends the tag information twice is used for description. Specifically, the tag device adjusts, based on at least one modulation symbol included in the tag information *x*(*n*) , a state of a load connected to an antenna, so that the tag device is in an "absorbing" or "reflective" state. In this way, the excitation signal *s*(*t* ) is modulated, to generate the uplink reflected signal *x*(*t* ) .

Specifically, the tag device modulates the first excitation sub-signal *s*₁(*t* ) based on the tag information x(n) by adjusting the state of the load connected to the antenna, to obtain the first uplink reflected sub-signal x₁(t). As described above, modulation in this application may be understood as multiplying two signals. For example, the first uplink reflected sub-signal x₁(t) may be represented as being obtained by multiplying the first excitation sub-signal *s*₁(*t*) by the tag information x(n). Because the phase sequence corresponding to the first excitation sub-signal *s*₁(*t*) in this application is [1, 1, ..., 1, 1], the first uplink reflected sub-signal x₁(t) = x(n).

Subsequently, the tag device modulates, based on the tag information x(n), the second excitation sub-signal *s*₂(*t* ) by adjusting the state of the load connected to the antenna, to obtain the second uplink reflected sub-signal x₂(t). For example, the second uplink reflected sub-signal x₂(t) may be represented as obtained by multiplying the second excitation sub-signal *s*₂(*t*) by the tag information x(n).

The following describes in detail a principle of cyclic shift of a signal in frequency domain.

Specifically, for one signal sequence, for example, the tag information x(n) in this application, a sequence in frequency domain corresponding to the signal sequence that can be obtained based on Fourier transform is as follows: ${\hat{x}}_{F} \left(k\right) = {\sum }_{n = 0}^{N - 1} {e}^{- j \frac{2 π}{N} kn} x \left(n\right)$

In this application, the second uplink reflected sub-signal *x*₂(*t* ) may be expressed as: ${x}_{2} \left(t\right) = x \left(n\right) {e}^{j \frac{2 πn}{N} Δ N}$ where
Δ*N* is an integer greater than or equal to 0 and less than or equal to N-1, ${e}^{j \frac{2 πn}{N} Δ N}$ is the second excitation sub-signal *s*₂(*t*). It can be learned from formula (6) that, the second uplink reflected sub-signal *x*₂(*t* ) is obtained by multiplying the tag information x(n) by the phase-shifted signal, and the phase-shifted signal is the second excitation sub-signal *s*₂(*t*).

A frequency domain sequence corresponding to the second uplink reflected sub-signal *x*₂(*t* ) obtained based on Fourier transform is as follows: ${\hat{x}}_{F 2} \left(k\right) = {\sum }_{n = 0}^{N - 1} {e}^{- j \frac{2 π}{N} kn} x \left(n\right) {e}^{j \frac{2 πn}{N} Δ N} = {\sum }_{n = 0}^{N - 1} {e}^{- j \frac{2 πn}{N} \left(k-ΔN\right)} x \left(n\right)$

*k̂ = mod*(*k -* △*N*, *N*) is taken, and a *mod*() integer modulo operation is performed, and the frequency domain sequence corresponding to the second uplink reflected sub-signal *x*₂(*t* ) may be expressed as: ${\hat{x}}_{F 2} \left(k\right) = {{{\sum }_{n = 0}^{N - 1} {e}^{- j \frac{2 πn}{N} \left(k-ΔN\right)} x \left(n\right)}_{︸}}_{\hat{k} = k - Δ N} = {\hat{x}}_{F 1} \left(mod\left(k-ΔN,N\right)\right)$

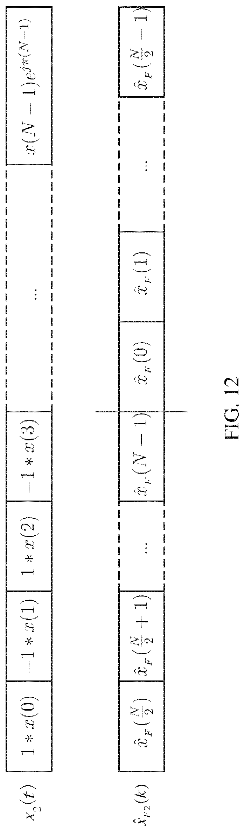

In an example, when $Δ N = \frac{N}{2}$, *x*₂(*t*) = *x*(*n*)*e^{j πN}*, and N/2 cyclic left shift of the corresponding frequency domain sequence is implemented. When $Δ N = - \frac{N}{2}$, *x*₂(*t* ) = *x*(*n*)*e^{-j πN}* , and N/2 cyclic right shift of the corresponding frequency domain sequence is implemented. It should be noted that, for N/2 cyclic shift, results of left shift and right shift are the same, and are all shown in FIG. 12. Refer to FIG. 12. A phase sequence corresponding to *e^{j πn}* is [1, -1, ..., 1, -1]. It may be specifically understood that the second uplink reflected sub-signal *x*₂(*t* ) is obtained by multiplying the tag information x(n) by a phase-shifted signal *e^{j πn}* whose phase sequence is [1, -1, ..., 1, -1], to implement cyclic left shift (or right shift) of frequency domain components corresponding to symbols 0 to N/2 of the second uplink reflected sub-signal *x*₂(*t* ) . A result is shown in FIG. 12.

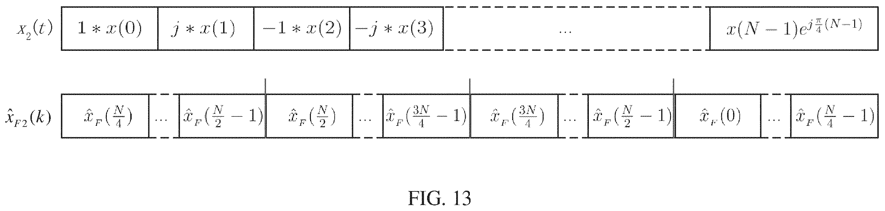

In another example, when $Δ N = \frac{N}{4} , {x}_{2} \left(t\right) = x \left(n\right) {e}^{j \frac{π}{2} N}$. It may be understood that the second uplink reflected sub-signal *x*₂(*t* ) is obtained by multiplying the tag information x(n) by a phase-shifted signal ${e}^{j \frac{π}{2} N}$ whose phase-shift sequence is [1, j, -1, -j, ..., 1, j, -1, -j], and N/4 cyclic left shift of the corresponding frequency domain sequence is implemented, as shown in FIG. 13.

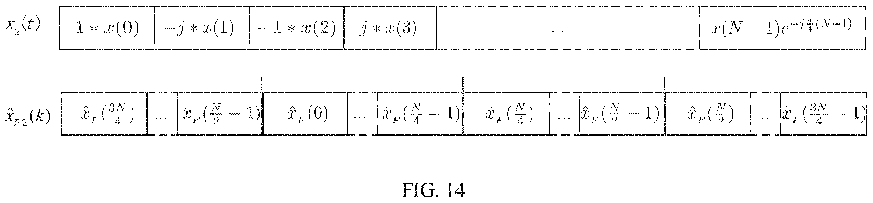

In still another example, when $Δ N = - \frac{N}{4} , {x}_{2} \left(t\right) = x \left(n\right) {e}^{- j \frac{π}{2} N}$. It may be understood that the second uplink reflected sub-signal *x*₂(*t* ) is obtained by multiplying the tag information x(n) by a phase-shifted signal ${e}^{- j \frac{π}{2} N}$ whose phase-shift sequence is [1, -j, -1, j, ..., 1, -j, -1, j], and N/4 cyclic right shift of the corresponding frequency domain sequence is implemented, as shown in FIG. 14.

Optionally, the tag information *x*(*n*) includes data information and check information, and the data information is data (Data) that is actually to be sent by the tag device. For example, the data information may be identification information of the tag device. The check information indicates the network device to check received data information, to detect whether the received data information is correct. For example, the check information may include a quantity of modulation symbols included in the data information. For details, refer to an embodiment in the conventional technology. This is not limited in this application.

Step 103: The tag device sends the uplink reflected signal.

Specifically, after separately modulating the first excitation signal *s*₁(*t* ) and the second excitation signal *s*₂(*t* ) in the excitation signal *s*(*t* ) based on the tag information *x*(*n*) , the tag device sends (or reflects) the generated uplink reflected signal *x*(*t* ) to the network device. The uplink reflected signal *x*(*t* ) includes the first uplink reflected sub-signal *x*₁(*t* ) and the second uplink reflected sub-signal *x*₂(*t* ).

Step 104: The network device receives an uplink signal, where the uplink signal is obtained after the uplink reflected signal sent by the tag device is transmitted through a channel.

Specifically, after the tag device sends the uplink reflected signal *x*(*t* ) , the uplink reflected signal *x*(*t* ) is transmitted to the network device through the channel.

Step 105: The network device performs diversity reception on the uplink signal in response to the received uplink signal.

Specifically, in this application, after receiving the uplink signal, the network device may perform diversity reception on the uplink signal.

A process of diversity reception is as follows:

The network device performs frequency domain transformation on the uplink signal *y*(*t )* to obtain a frequency domain sequence corresponding to the uplink signal *y*(*t )* . A first frequency domain sequence corresponding to the first uplink reflected sub-signal *x*₁(*t* ) may be expressed as: ${\hat{y}}_{F 1} \left(k\right) = {h}_{f} \left(k\right) {\hat{x}}_{F 1} \left(k\right)$ and
a second frequency domain sequence corresponding to the second uplink reflected sub-signal *x*₂(*t )* may be expressed as: ${\hat{y}}_{F 2} \left(k\right) = {h}_{f} \left(k\right) {\hat{x}}_{F 2} \left(k\right) = {h}_{f} \left(k\right) {\hat{x}}_{F 1} \left(mod\left(k-ΔN,N\right)\right)$ where
*h_{f}*(*k*) represents a channel response on the kth subcarrier, and *x̂*_{*F*1}(*k*) is a frequency domain sequence obtained by performing frequency domain transformation on the first uplink reflected sub-signal *x*₁(*t* ). For a frequency domain transformation process, refer to formula (5). Details are not described herein again.

*x̂*_{*F*2}(*k*) is a frequency domain sequence obtained by performing frequency domain transformation on the second uplink reflected sub-signal *x*₂(*t* ) . For a frequency domain transformation process of the second uplink reflected sub-signal *x*₂(*t* ) , refer to formulas (6) to (8). N is the quantity of modulation symbols included in the tag information *x*(*n*) , *k* = 0,...,*N* - 1 , and Δ*N* is an integer greater than 0 and less than or equal to N-1.

Subsequently, the network device combines frequency domain components that are of each modulation symbol included in the tag information *x*(*n*) and that are in the first frequency domain sequence and the second frequency domain sequence, to obtain a frequency domain component corresponding to each modulation symbol. The frequency domain component of the modulation symbol may be represented as: ${\hat{x}}_{F} \left(k\right) = {h}_{f} \left(k\right) ′ {\hat{y}}_{F 1} \left(k\right) + {h}_{f} \left(k\right) ′ {\hat{y}}_{F 2} \left(k\right)$ where
where k=0, 1, ..., N-1, and ()' represents obtaining a conjugate.

As described above, a retransmission manner in the conventional technology is only repeatedly sending tag information. For the network device, it is assumed that channel interference on a specific subcarrier is large. Even if the tag device repeatedly sends tag information for a plurality of times, when a modulation symbol is always located on the subcarrier that receives large channel interference, receive power of the modulation symbol is still very small. As a result, the corresponding modulation symbol on the subcarrier may be incorrectly received or cannot be received.

However, in this application, by using a phase-shift characteristic of the excitation signal, a signal corresponding to repeated tag information in the uplink reflected signal, namely, the second uplink reflected sub-signal, is cyclically shifted in frequency domain. In a diversity reception process of the network device, modulation symbols in the tag information correspond to different subcarriers. In other words, in a process in which the network device receives the tag information twice, modulation symbols correspond to different subcarriers in the two transmission processes, so that power of the modulation symbols is averaged. This improves a receiving success rate.

The following describes the foregoing effect in detail by using a specific example: The tag information *x*(*n*) is [x1, x2] as an example. In the conventional technology, a frequency domain component received by the network device on a subcarrier 1 is h1*x1, and a frequency domain component received on a subcarrier 2 is h2*x2, where h1 is a channel response on the subcarrier 1, and h2 is a channel response on the subcarrier 2. It is assumed that h1=0.1 and h2=10, even if the tag device sends the tag information twice, a frequency domain component corresponding to x1 is h1*x1+h1*x1=02*x1, and a frequency domain component corresponding to x2 is h2*x2+h2*x2=20*x2. It can be learned that, after repeat transmission, power of received x1 is very small, and power of received x2 is very large.

In this application, when sending the tag information for the first time, the tag device may send x1 on the subcarrier 1, and send x2 on the subcarrier 2. When sending the tag information for the second time, the tag device may send x2 on the subcarrier 1, and send x1 on the subcarrier 2. In other words, when sending the tag information for the second time, N/2 cyclic shift of a frequency domain sequence corresponding to the repeated tag information is implemented. The network device performs diversity reception, and combines frequency domain components of modulation signals of the tag information received twice in frequency domain. The frequency domain component corresponding to x1 is h1*x1+h2*x1=10.1*x1, and the frequency domain component corresponding to x2 is h1*x2+h2*x2=10.1*x2. It can be learned that receive power averaging can be implemented in this application. This improves a receiving success rate.

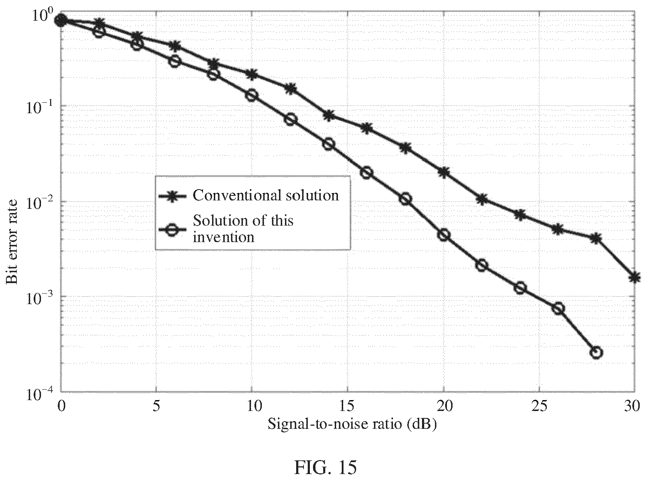

FIG. 15 is a diagram of effect comparison between the conventional technology and the technical solution of this application. A horizontal axis represents a signal-to-noise ratio (unit: dB), and a vertical axis represents a bit error rate. It can be learned from FIG. 15 that, in the technical solutions in this application, performance is significantly improved compared with performance of a conventional technical solution (namely, a simple retransmission solution), and a gain (the signal-to-noise ratio) may be increased by at least 5 dB. In other words, with a same bit error rate, the signal-to-noise ratio in this application is smaller.

In a possible implementation, the tag device in this application may be an independent device. That is, the tag information transmitted by the tag device is data of the tag device, for example, may be the identification information of the tag device. For example, the tag device may be a radio frequency identification (Radio Frequency Identification, RFID) tag. When the RFID tag is in an Internet of Things application scenario, the tag information may be a license plate number. In other words, the tag device may send the license plate number to the network device by modulating the excitation signal. Alternatively, the tag device may be an unlocking device, for example, a smart vehicle key, and corresponding tag information is unlocking information, or may be referred to as pairing information.

In a possible implementation, the tag device may be connected to another device. The tag device may obtain to-be-transmitted data of the another device, namely, tag information, and transmit, to the network device based on the technical solution in this application, the data obtained from the another device. For example, the tag device may be connected to a temperature sensor, where corresponding tag information is a temperature parameter obtained from the temperature sensor.

In a possible implementation, as described above, this application can resolve a problem of a high error rate of receiving the tag information by the network device in a scenario in which a distance between the network device and the tag device is long (for example, 500 meters). Optionally, this application may be implemented only in a scenario of long distance. For example, the network device may set a detection condition, and if the detection condition is met, the network device performs the technical solution of this application. The detection condition may be that an error rate of receiving the tag information is greater than a preset threshold. For example, the preset threshold may be 80%, and may be set based on an actual situation. This is not limited in this application.

In another possible implementation, a scenario limitation of a distance may be ignored in this application. In other words, this application is also applicable to a scenario in which the network device is close to the tag device. This is not limited in this application.

The technical solutions in the foregoing method embodiments are described below in detail by using several specific embodiments.

### Scenario 2

In this scenario, an example in which the second uplink reflected sub-signal implements N/2 cyclic shift in frequency domain is used for detailed description.

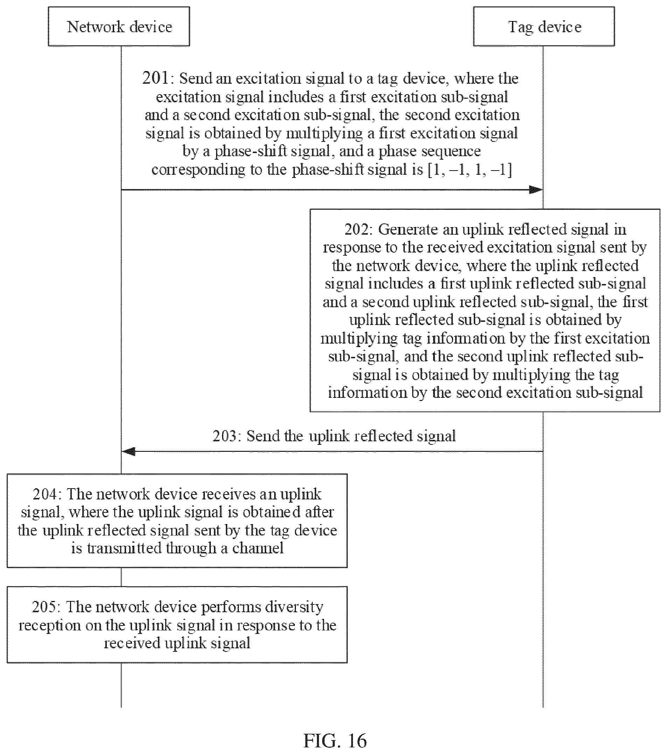

With reference to the communication system shown in FIG. 1a, FIG. 16 is a schematic flowchart of a backscatter communication method according to an embodiment of this application. FIG. 16 includes the following steps.

Step 201: A network device sends an excitation signal to a tag device, where the excitation signal includes a first excitation sub-signal and a second excitation sub-signal, the second excitation signal is obtained by multiplying a first excitation signal by a phase-shift signal, and a phase sequence corresponding to the phase-shift signal is [1, -1, 1, -1]

Specifically, in this embodiment and the following embodiments, an example in which the quantity N of modulation symbols of tag information *x*(*n*) is 4 is used for description. In other words, a time length occupied by the first excitation sub-signal *s*₁(*t* ) and the second excitation sub-signal *s*₂(*t* ) is 4T.

Based on formula (3) and formula (4), when n in the second excitation sub-signal *s*₂(*t*) is an even number, *ϕₙ* = 0 ; when n is an odd number, *ϕₙ* = *π*. Alternatively, when n in the second excitation sub-signal *s*₂(*t*) is an even number, *ϕₙ* = *π*; and n is an odd number, *ϕₙ* = 0 . In other words, when a value sequence corresponding to *ϕₙ* is [0, π, ..., 0, *π*], or [π, 0, ..., π, 0], the value sequence is substituted into formula (4), and the phase sequence corresponding to the second excitation sub-signal *s*₂(*t*) is [1, -1, ..., 1, -1]. In other words, it may be understood as that the second excitation sub-signal *s*₂(*t*) is obtained by multiplying the first excitation sub-signal *s*₁(*t*) by a phase shift signal whose phase sequence is [1, -1, ..., -1]. For a schematic diagram of the second excitation sub-signal, refer to FIG. 9. For example, in this embodiment, a time length occupied by the first excitation sub-signal *s*₁(*t*) and the second excitation sub-signal *s*₂(*t*) is 4T. A phase sequence corresponding to the first excitation sub-signal *s*₁(*t*) is [1, 1, 1, 1], and a phase sequence corresponding to the second excitation sub-signal *s*₂(*t*) is [1, -1, 1, -1].

For details, refer to step 101. Details are not described herein again.

Step 202: The tag device generates an uplink reflected signal in response to the received excitation signal sent by the network device, where the uplink reflected signal includes a first uplink reflected sub-signal and a second uplink reflected sub-signal, the first uplink reflected sub-signal is obtained by multiplying tag information by the first excitation sub-signal, and the second uplink reflected sub-signal is obtained by multiplying the tag information by the second excitation sub-signal.

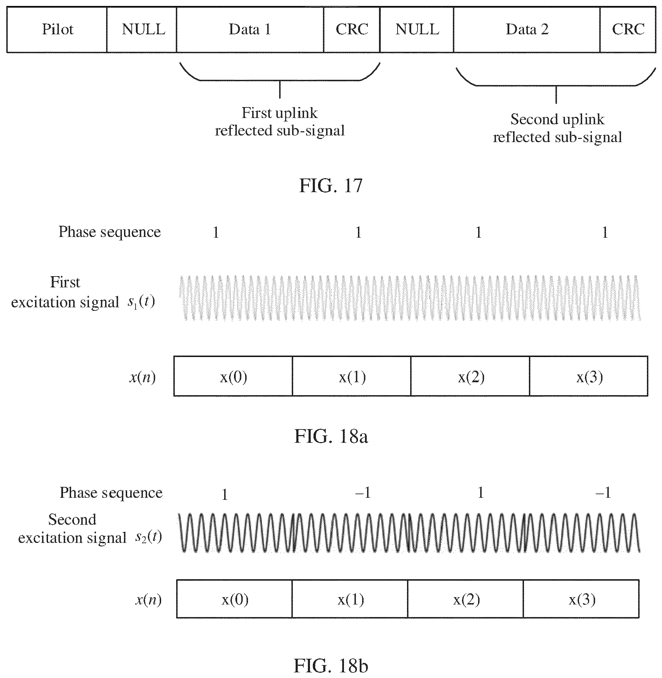

For example, in this embodiment, an example in which the tag device transmits the tag information *x*(*n*) twice, which may alternatively be understood as that the tag device repeatedly transmits the tag information for one time, is still used as an example. For the generated uplink reflected signal *x*(*t* ) , refer to FIG. 17.

Refer to FIG. 17. Data 1 and CRC (the first CRC) correspond to the first uplink reflected sub-signal *x*₁(*t*). Data 2 and CRC (the second CRC) correspond to the second uplink reflected sub-signal *x*₂(*t* ) . A pilot (Pilot) is used by a receive end to perform synchronization and channel estimation, and a null value (NULL) indicates that the tag device does not send data.

With reference to FIG. 17, FIG. 18a is a schematic diagram of generating a first uplink reflected sub-signal *x*₁(*n*) . Specifically, it is assumed that tag information x(n) is [x(0), x(1), x(2), x(3)], the first uplink reflected sub-signal *x*₁(*t*) is obtained by multiplying the tag information [x(0), x(1), x(2), x(3)] by the first excitation sub-signal *s*₁(*t*), where a phase sequence corresponding to the first excitation sub-signal *s*₁(*t*) is [1, 1, 1, 1].

FIG. 18b is a schematic diagram of generating a second uplink reflected sub-signal *x*₂(*t*). A modulation symbol included in the tag information repeatedly sent by the tag device is still [x(0), x(1), x(2), x(3)]. The second uplink reflected sub-signal *x*₂(*t*) is obtained by multiplying the tag information [x(0), x(1), x(2), x(3)] by the second excitation sub-signal *s*₂(*t*), where the phase sequence corresponding to the second excitation sub-signal *s*₂(*t*) is [1, -1, 1, -1].

For details, refer to step 102. Details are not described herein again.

Step 203: The tag device sends the uplink reflected signal.

For specific details, refer to step 103. Details are not described herein again.

Step 204: The network device receives an uplink signal, where the uplink signal is obtained after the uplink reflected signal sent by the tag device is transmitted through a channel.

For specific details, refer to step 104. Details are not described herein again.

Step 205: The network device performs diversity reception on the uplink signal in response to the received uplink signal.

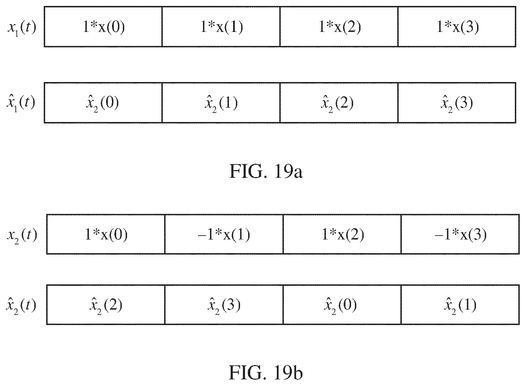

For example, in this embodiment, the network device may obtain, based on formula (9) and formula (10), the first frequency domain sequence corresponding to the first uplink reflected sub-signal *x*₁(*t* ) and the second frequency domain sequence corresponding to the second uplink reflected sub-signal *x*₂(*t* ) . The first frequency domain sequence is shown in FIG. 19a, and the second frequency domain sequence is shown in FIG. 19b. The second frequency domain sequence is cyclically shifted relative to the first frequency domain sequence by N/2 symbols.

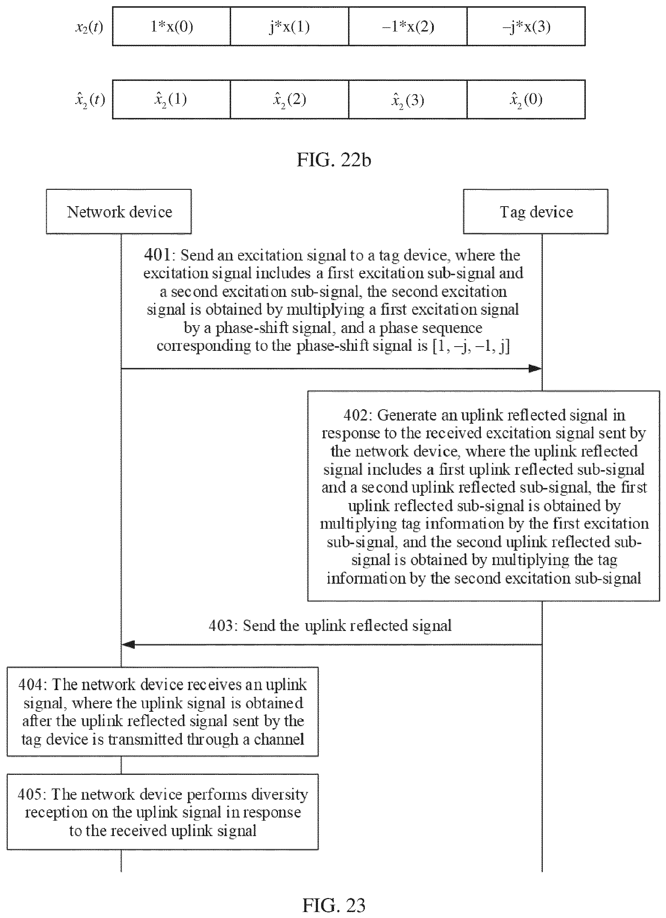

Specifically, refer to FIG. 19a and FIG. 22b. A channel response corresponding to a modulation symbol x(0) on a subcarrier 1 in the first frequency domain sequence is *h_{f}*(1). A channel response corresponding to the modulation symbol x(0) on a subcarrier 3 in the second frequency domain sequence is *h_{f}*( 3) . A channel response corresponding to a modulation symbol x(1) on a subcarrier 2 in the first frequency domain sequence is *h_{f}(2)* . A channel response corresponding to the modulation symbol x(1) on the subcarrier 4 in the second frequency domain sequence is *h_{f}*(4). A channel response corresponding to a modulation symbol x(2) is on a subcarrier 3 in the first frequency domain sequence is *h_{f}*( 3) . A channel response corresponding to the modulation symbol x(2) is on the subcarrier 1 in the second frequency domain sequence is *h_{f}*(1). A channel response corresponding to the modulation symbol x(3) is on the subcarrier 4 in the first frequency domain sequence is *h_{f}*( 4) . A channel response corresponding to the modulation symbol x(3) is on the subcarrier 2 in the second frequency domain sequence is *h_{f}*(2).

Then, the network device combines frequency domain components of each modulation symbol to obtain a frequency domain component corresponding to each modulation symbol.

For example, a frequency domain component corresponding to the modulation symbol x(0) is (*h_{f}*( 1)+ *h_{f}*(3) )*x(0); a frequency domain component corresponding to the modulation symbol x(1) is (*h_{f}(2)* + *h_{f}*( 4) )*x(1); a frequency domain component corresponding to the modulation symbol x(2) is ( *h_{f}* ( 3) + *h_{f}*( 1))*x(2); a frequency domain component corresponding to the modulation symbol x(3) is ( *h_{f}* ( 4) *+ h_{f}* (2) )*x(3).

### Scenario 3

In this scenario, an example in which the second uplink reflected sub-signal implements N/4 cyclic left shift in frequency domain is used for detailed description.

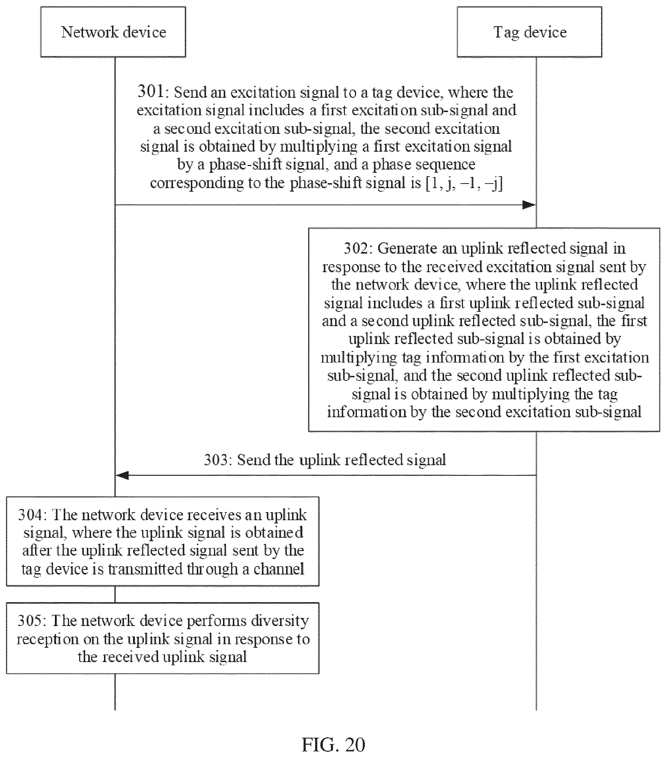

With reference to the communication system shown in FIG. 1a, FIG. 20 is a schematic flowchart of a backscatter communication method according to an embodiment of this application. FIG. 20 includes the following steps.

Step 301: A network device sends an excitation signal to a tag device, where the excitation signal includes a first excitation sub-signal and a second excitation sub-signal, the second excitation signal is obtained by multiplying a first excitation signal by a phase-shift signal, and a phase sequence corresponding to the phase-shift signal is [1, j, - 1, -j]

Specifically, based on formula (3) and formula (4), in the second excitation sub-signal *s*₂(*t*) in this embodiment, when n=4k, *ϕₙ* = 0; when n=4k+1, ${ϕ}_{n} = \frac{π}{2}$; when n=4k+2, *ϕₙ* = *π*; when n=4k+3, ${ϕ}_{n} = \frac{3 π}{2}$. These coefficients are substituted into formula (4), and the phase sequence corresponding to the second excitation sub-signal *s*₂(*t*) is [1, j, -1, -j]. It may be understood as that the second excitation sub-signal *s*₂(*t*) is obtained by multiplying the first excitation sub-signal *s*₁(*t*) by the phase-shift signal whose phase sequence is [1, j, -1, -j]. For a schematic diagram of the second excitation sub-signal *s*₂(*t* ), refer to FIG. 10.

Step 302: The tag device generates an uplink reflected signal in response to the received excitation signal sent by the network device, where the uplink reflected signal includes a first uplink reflected sub-signal and a second uplink reflected sub-signal, the first uplink reflected sub-signal is obtained by multiplying tag information by the first excitation sub-signal, and the second uplink reflected sub-signal is obtained by multiplying the tag information by the second excitation sub-signal.

For example, in this embodiment, an example in which the tag device transmits the tag information twice, that is, repeatedly transmits the tag information for one time, is still used as an example. For the generated uplink reflected signal *x*(*t* ), still refer to FIG. 17.

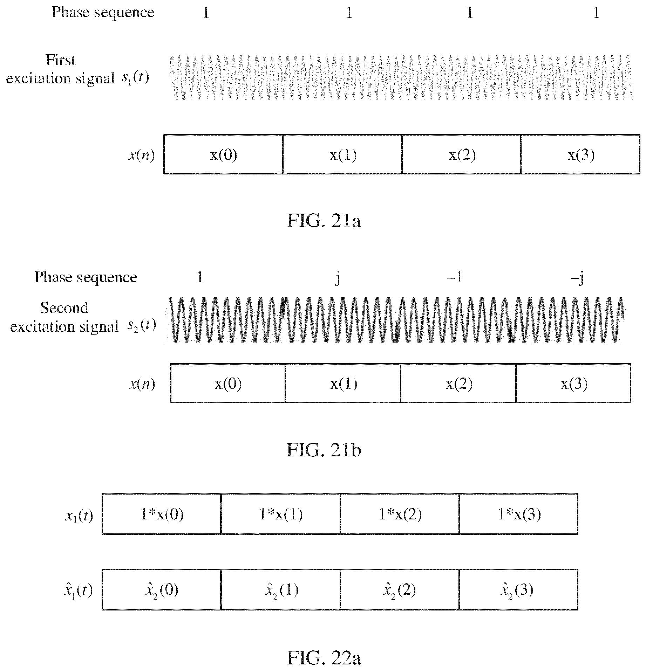

With reference to FIG. 17, FIG. 21a is a schematic diagram of generating a first uplink reflected sub-signal *x*₁(*t*). Specifically, it is assumed that tag information x(n) is [x(0), x(1), x(2), x(3)]. The first uplink reflected sub-signal *x*₁(*t*) is obtained by multiplying the tag information [x(0), x(1), x(2), x(3)] by the first excitation sub-signal *s*₁(*t*), where a phase sequence corresponding to the first excitation sub-signal *s*₁(*t*) is [1, 1, 1, 1].

FIG. 21b is a schematic diagram of generating a second uplink reflected sub-signal *x*₂(*t*). A modulation symbol included in the tag information repeatedly sent by the tag device is still [x(0), x(1), x(2), x(3)]. The second uplink reflected sub-signal *x*₂(*t*) is obtained by multiplying the tag information [x(0), x(1), x(2), x(3)] by the second excitation sub-signal *s*₂(*t*), where the phase sequence corresponding to the second excitation sub-signal *s*₂(*t*) is [1, j, -1, -j].

For details, refer to step 102. Details are not described herein again.

Step 303: The tag device sends the uplink reflected signal.

For specific details, refer to step 103. Details are not described herein again.

Step 304: The network device receives an uplink signal, where the uplink signal is obtained after the uplink reflected signal sent by the tag device is transmitted through a channel.

For specific details, refer to step 104. Details are not described herein again.

Step 305: The network device performs diversity reception on the uplink signal in response to the received uplink signal.

For example, in this embodiment, the network device may obtain, based on formula (9) and formula (10), the first frequency domain sequence corresponding to the first uplink reflected sub-signal *x*₁(*t*) and the second frequency domain sequence corresponding to the second uplink reflected sub-signal *x*₁(*t*). The first frequency domain sequence is shown in FIG. 22a, and the second frequency domain sequence is shown in FIG. 22b. That is, the second frequency domain sequence is cyclically left-shifted relative to the first frequency domain sequence by N/4 symbols. Optionally, it may also be understood as that the second frequency domain sequence is cyclically right-shifted relative to the first frequency domain sequence by 3N/4 symbols.

Specifically, refer to FIG. 22a and FIG. 22b. A channel response corresponding to a modulation symbol x(0) on a subcarrier 1 in the first frequency domain sequence is *h_{f}*( 1) . A channel response corresponding to the modulation symbol x(0) on a subcarrier 4 in the second frequency domain sequence is *h_{f}*( 4) . A channel response corresponding to a modulation symbol x(1) on a subcarrier 2 in the first frequency domain sequence is *h_{f}*(*2*) . A channel response corresponding to the modulation symbol x(1) on the subcarrier 1 in the second frequency domain sequence is *h_{f}*( 1). A channel response corresponding to a modulation symbol x(2) is on a subcarrier 3 in the first frequency domain sequence is *h_{f}*( 3) . A channel response corresponding to the modulation symbol x(2) is on the subcarrier 2 in the second frequency domain sequence is *h_{f}* (2) . A channel response corresponding to the modulation symbol x(3) is on the subcarrier 4 in the first frequency domain sequence is *h_{f}*( 4) . A channel response corresponding to the modulation symbol x(3) is on the subcarrier 3 in the second frequency domain sequence is *h_{f}*(3).

Then, the network device combines frequency domain components of each modulation symbol to obtain a frequency domain component corresponding to each modulation symbol.

For example, a frequency domain component corresponding to the modulation symbol x(0) is (*h_{f}*(1)+ *h_{f}*(4))*x(0); a frequency domain component corresponding to the modulation symbol x(1) is (*h_{f}*(2) + *h_{f}*(1))*x(1); a frequency domain component corresponding to the modulation symbol x(2) is (*h_{f}*(3) *+ h_{f}*(2))*x(2); a frequency domain component corresponding to the modulation symbol x(3) is (*h_{f}*(4) *+ h_{f}*(3))*x(3).

### Scenario 4

In this scenario, an example in which the second uplink reflected sub-signal implements 3N/4 cyclic shift in frequency domain is used for detailed description.

With reference to the communication system shown in FIG. 1a, FIG. 23 is a schematic flowchart of a backscatter communication method according to an embodiment of this application. FIG. 23 includes the following steps.

Step 401: A network device sends an excitation signal to a tag device, where the excitation signal includes a first excitation sub-signal and a second excitation sub-signal, the second excitation signal is obtained by multiplying a first excitation signal by a phase-shift signal, and a phase sequence corresponding to the phase-shift signal is [1, -j, -1, j].

Specifically, based on formula (3) and formula (4), in the second excitation sub-signal *s*₂(*t*) in this embodiment, when n=4k, *ϕₙ* = 0; when n=4k+1, ${ϕ}_{n} = \frac{π}{2}$; when n=4k+2, *ϕₙ* = *π*; when n=4k+3, ${ϕ}_{n} = \frac{3 π}{2}$. These coefficients are substituted into formula (4), and the phase sequence corresponding to the second excitation sub-signal *s*₂(*t*) is [1, -j, -1, j]. It may be understood as that the second excitation sub-signal *s*₂(*t*) is obtained by multiplying the first excitation sub-signal *s*₁(*t*) by the phase-shift signal whose phase sequence is [1, -j, -1, j]. For a schematic diagram of the second excitation sub-signal *s*₂(*t*), refer to FIG. 10. For example, in this embodiment, a time length occupied by the first excitation sub-signal *s*₁(*t*) and the second excitation sub-signal *s*₂(*t*) is 4T. A phase sequence corresponding to the first excitation sub-signal *s*₁(*t*) is [1, 1, 1, 1], and a phase sequence corresponding to the second excitation sub-signal *s*₂(*t*) is [1, -j, -1, j].

For details, refer to step 101. Details are not described herein again.

Step 402: The tag device generates an uplink reflected signal in response to the received excitation signal sent by the network device, where the uplink reflected signal includes a first uplink reflected sub-signal and a second uplink reflected sub-signal, the first uplink reflected sub-signal is obtained by multiplying tag information by the first excitation sub-signal, and the second uplink reflected sub-signal is obtained by multiplying the tag information by the second excitation sub-signal.

For example, in this embodiment, an example in which the tag device transmits the tag information twice, which may alternatively be understood as that the tag device repeatedly transmits the tag information for one time, is still used as an example. For the generated uplink reflected signal, still refer to FIG. 17.

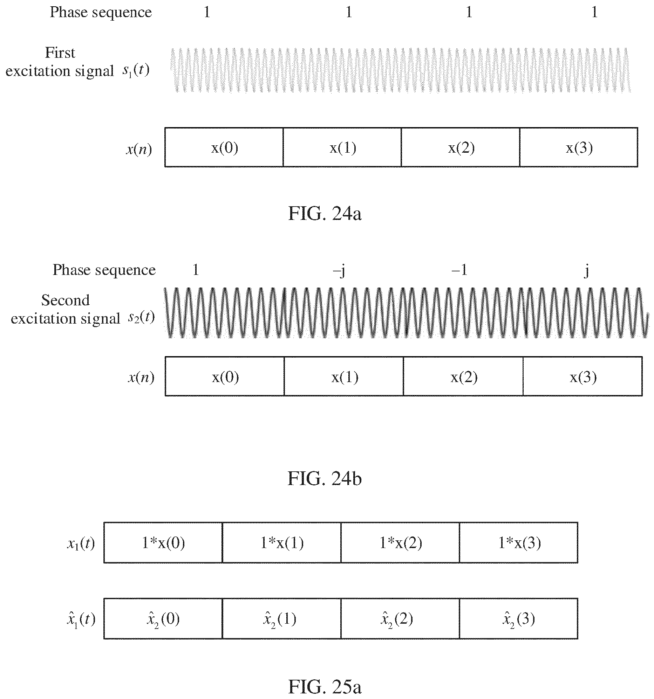

With reference to FIG. 17, FIG. 24a is a schematic diagram of generating a first uplink reflected sub-signal *x*₁(*t*). Specifically, it is assumed that tag information x(n) is [x(0), x(1), x(2), x(3)], the first uplink reflected sub-signal *x*₁(*t*) is obtained by multiplying the tag information [x(0), x(1), x(2), x(3)] by the first excitation sub-signal *s*₁(*t*), where a phase sequence corresponding to the first excitation sub-signal *s*₁(*t*) is [1, 1, 1, 1].

FIG. 24b is a schematic diagram of generating a second uplink reflected sub-signal *x*₂(*t*). A modulation symbol included in the tag information repeatedly sent by the tag device is still [x(0), x(1), x(2), x(3)]. The second uplink reflected sub-signal *x*₂(*t*) is obtained by multiplying the tag information [x(0), x(1), x(2), x(3)] by the second excitation sub-signal *s*₂(*t*), where the phase sequence corresponding to the second excitation sub-signal *s*₂(*t*) is [1, j, -1, -j].

For details, refer to step 102. Details are not described herein again.

Step 403: The tag device sends the uplink reflected signal.

For specific details, refer to step 103. Details are not described herein again.

Step 404: The network device receives an uplink signal, where the uplink signal is obtained after the uplink reflected signal sent by the tag device is transmitted through a channel.

For specific details, refer to step 104. Details are not described herein again.

Step 405: The network device performs diversity reception on the uplink signal in response to the received uplink signal.

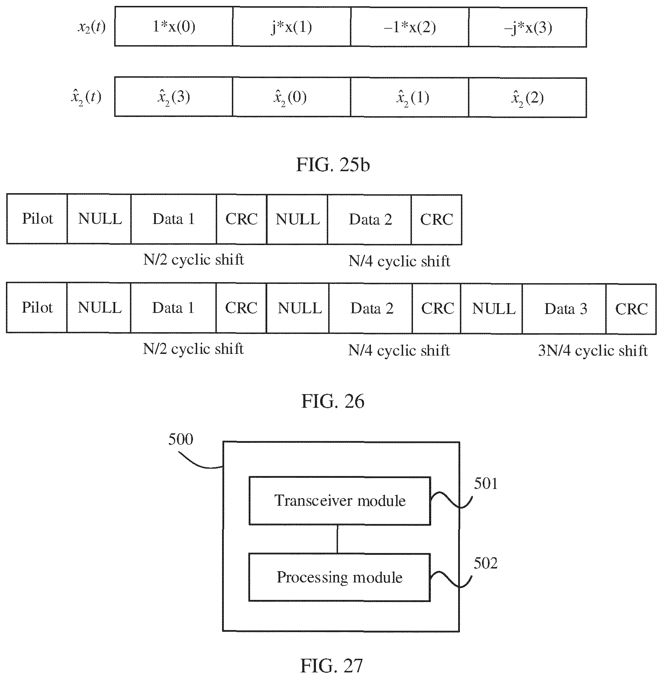

For example, in this embodiment, the network device may obtain, based on formula (9) and formula (10), the first frequency domain sequence corresponding to the first uplink reflected sub-signal *x*₁(*t*) and the second frequency domain sequence corresponding to the second uplink reflected sub-signal *x*₂(*t*). The first frequency domain sequence is shown in FIG. 25a, and the second frequency domain sequence is shown in FIG. 22b. That is, the second frequency domain sequence is cyclically left-shifted relative to the first frequency domain sequence by 3N/4 symbols. Optionally, it may also be understood as that the second frequency domain sequence is cyclically right-shifted relative to the first frequency domain sequence by N/4 symbols.

Specifically, refer to FIG. 19a and FIG. 19b. A channel response corresponding to a modulation symbol x(0) on a subcarrier 1 in the first frequency domain sequence is *h_{f}*(1). A channel response corresponding to the modulation symbol x(0) on a subcarrier 2 in the second frequency domain sequence is *h_{f}*(2) . A channel response corresponding to a modulation symbol x(1) on a subcarrier 2 in the first frequency domain sequence is *h_{f}*(2) . A channel response corresponding to the modulation symbol x(1) on the subcarrier 3 in the second frequency domain sequence is *h_{f}*(3) . A channel response corresponding to a modulation symbol x(2) is on a subcarrier 3 in the first frequency domain sequence is *h_{f}*(3) . A channel response corresponding to the modulation symbol x(2) is on the subcarrier 4 in the second frequency domain sequence is *h_{f}*(4) . A channel response corresponding to the modulation symbol x(3) is on the subcarrier 4 in the first frequency domain sequence is *h_{f}*(4) . A channel response corresponding to the modulation symbol x(3) is on the subcarrier 1 in the second frequency domain sequence is *h_{f}*(1).

Then, the network device combines frequency domain components of each modulation symbol to obtain a frequency domain component corresponding to each modulation symbol.

For example, a frequency domain component corresponding to the modulation symbol x(0) is (*h_{f}*(1) + *h_{f}*(2))*x(0); a frequency domain component corresponding to the modulation symbol x(1) is (*h_{f}*(2) + *h_{f}*(3))*x(1); a frequency domain component corresponding to the modulation symbol x(2) is (*h_{f}*(3) + *h_{f}*(4))*x(2); a frequency domain component corresponding to the modulation symbol x(3) is (*h_{f}*(4) + *h_{f}*(1))*x(3).

In a possible implementation, to implement N/2 cyclic shift of repeated tag information in frequency domain, in addition to use of the excitation signal having the phase-shift characteristic in the scenario 1 to the scenario 2, the tag device may further adjust a load status of an antenna, so that a polarity of an even number modulation symbol of the repeated tag information remains unchanged, and a polarity of an odd number modulation symbol is opposite. Specifically, in this embodiment, tag information in the first transmission is the same as that in the scenario 1 to the scenario 2, and details are not described herein again. The tag information that is repeatedly transmitted may be expressed as follows: $\left\{\begin{matrix}{x}_{2} \left(2∗m\right) = x \left(2∗m\right) \\ {x}_{2} \left(2∗m+1\right) = \prod \left(x\left(2∗m+1\right)\right)\end{matrix} m=0, 1,⋯, N/2-1\right.$

Π is a reflection coefficient of the tag device after adjustment. Specifically, as described above, the tag device may implement an "absorbing" state or a "reflective" state of the tag device based on Γ(*z*). In this embodiment, Π(*z*) is a state opposite to Γ(*z*). For an odd number modulation symbol in the tag information, that is, a modulation symbol corresponding to *x*₂(2 * *m +* 1) in formula (12), when adjusting a state of the tag device, the tag device uses an adjustment coefficient Π(*z*) opposite to the original adjustment coefficient Γ(*z*), to achieve the same effect as that in the scenario 2.

In a possible implementation, the technical solutions of this application may be further applied to a scenario in which tag information is repeatedly sent for a plurality of times. Optionally, when the tag information is repeatedly sent two or more times, any cyclic shift manner in the scenario 2 to the scenario 4 may be used. In other words, at least one of N/2, N/4, and 3N/4 cyclic shifts may be performed on a signal part corresponding to the repeatedly sent tag information. This is not limited in this application. For example, as shown in FIG. 26, the tag information is repeatedly sent twice and repeatedly sent three times. Specifically, in a case in which the tag device repeatedly sends the tag information twice, that is, the same tag information is sent three times in total (which may also be referred to as three times of repeated coding), a signal corresponding to the tag information sent for the second time may be cyclically left-shifted by N/4 symbols in frequency domain, and a signal corresponding to the tag information sent for the third time may be cyclically left-shifted by N/2 symbols in frequency domain. In a case in which the tag device repeatedly sends the tag information three times, that is, the same tag information is sent four times in total (which may also be referred to as four times of repeated coding), a signal corresponding to the tag information sent for the second time may be cyclically left-shifted by N/4 symbols in frequency domain, a signal corresponding to the tag information sent for the third time may be cyclically left-shifted by N/2 symbols in frequency domain, and a signal corresponding to the tag information sent for the fourth time may be cyclically left-shifted by 3N/4 symbols in frequency domain.

In this application, only a two-node scenario, that is, a scenario including the network device and the tag device shown in FIG. 1a, is used for description. In another embodiment, this application may also be applied to a three-node scenario, that is, an application scenario including the network device 100, the relay device 300, and the tag device 200, as shown in FIG. 1b. The network device 100 sends indication information to the relay device 300, where the indication information indicates the tag device 200 to send an uplink reflected signal. The relay device 300 sends the indication information to the tag device 200. Subsequently, the relay device 300 sends an excitation signal having a phase-shift characteristic to the tag device 200, and the tag device 200 may repeatedly send tag information to the network device 100 based on the excitation signal. In other words, in the three-node scenario, details are the same as those in the scenario 1 to the scenario 4, except that a node sending the excitation signal is different from that in the scenario 1 to the scenario 4. Details are not described herein again.

The foregoing mainly describes the solutions provided in embodiments of this application from a perspective of interaction between network elements. It can be understood that to implement the foregoing functions, the network device and the tag device include corresponding hardware structures and/or software modules for implementing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the network device and the tag device may be divided based on the foregoing method examples. For example, each functional module may be divided corresponding to each function, or two or more functions may be integrated into one processing module. The foregoing integrated module may be implemented in a form of hardware, or may be implemented in a form of a software functional module. It should be noted that, in embodiments of this application, module division is an example, and is merely a logical function division. During actual implementation, another division manner may be used.

When each functional module is obtained through division based on each corresponding function, FIG. 27 is a possible schematic diagram of a structure of a network device 500 in the foregoing embodiment. As shown in FIG. 27, the network device 500 may include a transceiver module 501 and a processing module 502.

In an example, the network device 500 may be configured to implement the method shown in FIG. 8 in the foregoing embodiment. Specifically, the transceiver module 501 is configured to perform the step of sending an excitation signal to a tag device, where the excitation signal includes a first excitation sub-signal and a second excitation sub-signal, the second excitation sub-signal and the first excitation sub-signal occupy a same time, and some symbols in the second excitation sub-signal have different phases from some symbols in the first excitation sub-signal. For example, the transceiver module 501 may be configured to support the network device in performing step 101 in the foregoing method embodiment. The transceiver module 501 is further configured to perform the step of receiving an uplink signal, where the uplink signal is obtained after an uplink reflected signal sent by the tag device is transmitted through a channel, the uplink reflected signal includes a first uplink reflected sub-signal and a second uplink reflected sub-signal, the first uplink reflected sub-signal is obtained by multiplying tag information by the first excitation sub-signal, and the second uplink reflected sub-signal is obtained by multiplying the tag information by the second excitation sub-signal. For example, the transceiver module 501 may be configured to support the network device in performing step 104 in the foregoing method embodiment. The processing module 502 is configured to perform the step of performing diversity reception on the uplink signal in response to the received uplink signal. For example, the processing module 502 may be configured to support the network device in performing step 105 in the foregoing method embodiment.

In another example, the network device 500 may be configured to implement the method shown in FIG. 16 in the foregoing embodiment. Specifically, the transceiver module 501 is configured to perform the step of sending an excitation signal to a tag device, where the excitation signal includes a first excitation sub-signal and a second excitation sub-signal, the second excitation signal is obtained by multiplying a first excitation signal by a phase-shift signal, and a phase sequence corresponding to the phase-shift signal is [1, -1, 1, -1]. For example, the transceiver module 501 may be configured to support the network device in performing step 201 in the foregoing method embodiment. The transceiver module 501 is further configured to perform the step of receiving an uplink signal. For example, the transceiver module 501 may be configured to support the network device in performing step 204 in the foregoing method embodiment. The processing module 502 is configured to perform the step of performing diversity reception on the uplink signal in response to the received uplink signal. For example, the processing module 502 may be configured to support the network device in performing step 205 in the foregoing method embodiment.

In another example, the network device 500 may be configured to implement the method shown in FIG. 20 in the foregoing embodiment. Specifically, the transceiver module 501 is configured to perform the step of sending an excitation signal to a tag device, where the excitation signal includes a first excitation sub-signal and a second excitation sub-signal, the second excitation signal is obtained by multiplying a first excitation signal by a phase-shift signal, and a phase sequence corresponding to the phase-shift signal is [1, j, -1, -j]. For example, the transceiver module 501 may be configured to support the network device in performing step 301 in the foregoing method embodiment. The transceiver module 501 is further configured to perform the step of receiving an uplink signal. For example, the transceiver module 501 may be configured to support the network device in performing step 304 in the foregoing method embodiment. The processing module 502 is configured to perform the step of performing diversity reception on the uplink signal in response to the received uplink signal. For example, the processing module 502 may be configured to support the network device in performing step 305 in the foregoing method embodiment.

In another example, the network device 500 may be configured to implement the method shown in FIG. 23 in the foregoing embodiment. Specifically, the transceiver module 501 is configured to perform the step of sending an excitation signal to a tag device, where the excitation signal includes a first excitation sub-signal and a second excitation sub-signal, the second excitation signal is obtained by multiplying a first excitation signal by a phase-shift signal, and a phase sequence corresponding to the phase-shift signal is [1, -j, -1, j]. For example, the transceiver module 501 may be configured to support the network device in performing step 501 in the foregoing method embodiment. The transceiver module 501 is further configured to perform the step of receiving an uplink signal. For example, the transceiver module 501 may be configured to support the network device in performing step 404 in the foregoing method embodiment. The processing module 502 is configured to perform the step of performing diversity reception on the uplink signal in response to the received uplink signal. For example, the processing module 502 may be configured to support the network device in performing step 405 in the foregoing method embodiment.

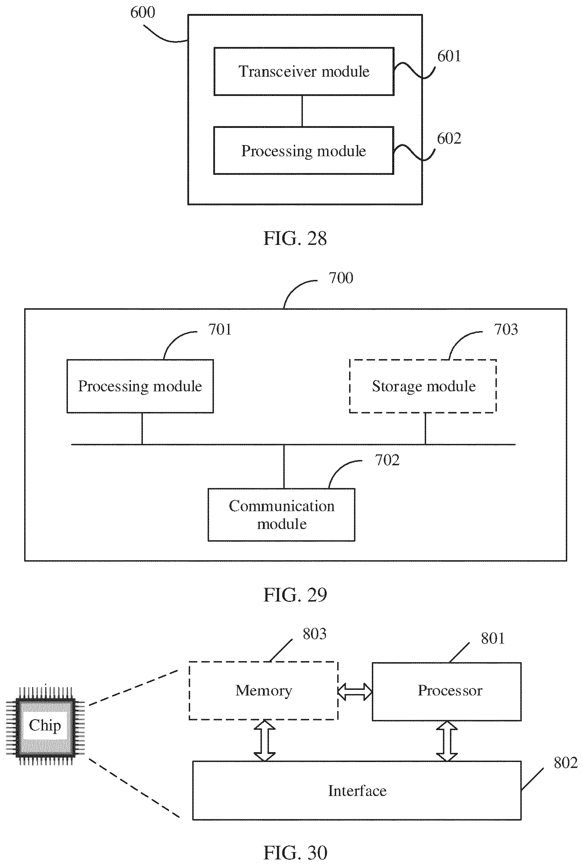

FIG. 28 is a possible schematic diagram of a structure of a tag device 600 in the foregoing embodiment. As shown in FIG. 28, the tag device 600 may include a transceiver module 601. The transceiver module 601 is configured to perform the step of receiving an excitation signal sent by a network device, where the excitation signal includes a first excitation sub-signal and a second excitation sub-signal, the second excitation sub-signal and the first excitation sub-signal occupy a same time, some symbols in the second excitation sub-signal have different phases from some symbols in the first excitation sub-signal. For example, the transceiver module 601 may be configured to support the network device in performing the steps of receiving the excitation signal in step 102, step 202, step 302, and step 402 in the foregoing method embodiments. Optionally, the tag device 600 further includes a processing module 602. The module is configured to perform the step of generating an uplink reflected signal in response to the received excitation signal, where the uplink reflected signal includes a first uplink reflected sub-signal and a second uplink reflected sub-signal, the first uplink reflected sub-signal is obtained by multiplying tag information by the first excitation sub-signal, and the second uplink reflected sub-signal is obtained by multiplying the tag information by the second excitation sub-signal. For example, the processing module 602 may be configured to support the network device in performing step 102, step 202, step 302, and step 402 in the foregoing method embodiments. The transceiver module 601 is further configured to perform the step of sending an uplink reflected signal to the network device. For example, the transceiver module 601 may be configured to support the network device in performing step 103, step 203, step 303, and step 403 in the foregoing method embodiments.

The following describes an apparatus provided in an embodiment of this application. As shown in FIG. 29:
The apparatus includes a processing module 701 and a communication module 702. Optionally, the apparatus further includes a storage module 703. The processing module 701, the communication module 702, and the storage module 703 are connected through a communication bus.

The communication module 702 may be an apparatus having a transceiver function, and is configured to communicate with another network device or a communication network.

The storage module 703 may include one or more memories, and the memory may be a component configured to store a program or data in one or more devices or circuits.

The storage module 703 may exist independently, and is connected to the processing module 701 through the communication bus. Alternatively, the storage module may be integrated with the processing module 701.

The apparatus 700 may be used in a network device, a circuit, a hardware component, or a chip.

The apparatus 700 may be the network device in embodiments of this application. A schematic diagram of the network device may be shown in FIG. 2. Optionally, the communication module 702 of the apparatus 700 may include an antenna and a transceiver of the network device, for example, the antenna 305 and the transceiver 303 in FIG. 2. The communication module 702 may further include a network interface of the network device, for example, the network interface 304 in FIG. 2.

The apparatus 700 may be a chip in the network device in embodiments of this application. The communication module 702 may be an input or output interface, a pin, a circuit, or the like. Optionally, the storage module may store computer-executable instructions in a method on a storage network device side, to enable the processing module 701 to perform the method on the network device side in the foregoing embodiments. The storage module 703 may be a register, a cache, a RAM, or the like, and the storage module 703 may be integrated with the processing module 701. The storage module 703 may be a ROM or another type of static storage device that can store static information and instructions, and the storage module 703 may be independent of the processing module 701. Optionally, with development of wireless communication technologies, a transceiver may be integrated into the apparatus 700. For example, the transceiver 303 and the network interface 304 are integrated into the communication module 702.

When the apparatus 700 is the network device or the chip in the network device in embodiments of this application, the method performed by the network device in the foregoing embodiments may be implemented.

The apparatus 700 may be the tag device in embodiments of this application. A schematic diagram of the tag device may be shown in FIG. 6. Optionally, the communication module 702 of the apparatus 700 may include an antenna of the tag device.

The apparatus 700 may be a chip in the tag device in embodiments of this application. The communication module 702 may be an input or output interface, a pin, a circuit, or the like. Optionally, the storage module may store computer-executable instructions in a method on a tag device side, to enable the processing module 701 to perform the method on the tag device side in the foregoing embodiments. The storage module 703 may be a register, a cache, a RAM, or the like, and the storage module 703 may be integrated with the processing module 701. The storage module 703 may be a ROM or another type of static storage device that can store static information and instructions, and the storage module 703 may be independent of the processing module 701.

When the apparatus 700 is the tag device or the chip in the tag device in embodiments of this application, the apparatus 700 may implement the method performed by the tag device in the foregoing embodiments.

For the communication apparatus implemented in the form of the chip or the chip system, refer to a schematic diagram of a structure of a chip shown in FIG. 30. The chip shown in FIG. 30 includes a processor 801 and an interface 802. There may be one or more processors 801, and there may be a plurality of interfaces 802. Optionally, the chip or the chip system may include a memory 803.

An embodiment of this application further provides a computer-readable storage medium. The methods described in the foregoing embodiments may be all or partially implemented by software, hardware, firmware, or any combination thereof. If the methods are implemented in the software, functions used as one or more instructions or code may be stored in the computer-readable medium or transmitted on the computer-readable medium. The computer-readable medium may include a computer storage medium and a communication medium, and may further include any medium that can transfer a computer program from one place to another. The storage medium may be any available medium accessible to a computer.

In an optional design, the computer-readable medium may include a RAM, a ROM, an EEPROM, a CD-ROM or another optical disc storage device, a magnetic disk storage device or another magnetic storage device, or any other medium that can be configured to carry or store required program code in a form of an instruction or a data structure and that may be accessed by the computer. In addition, any connection is appropriately referred to as a computer-readable medium. For example, if a coaxial cable, an optical fiber cable, a twisted pair, a digital subscriber line (DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Magnetic disks and optical discs used in this specification include a compact disc (CD), a laser disc, an optical disc, a digital versatile disc (DVD), a floppy disk, and a Blu-ray disc. The magnetic disks usually magnetically reproduce data, and the optical discs optically reproduce data by using laser light. The foregoing combinations should also be included within the scope of the computer-readable medium.

An embodiment of this application further provides a computer program product. The methods described in the foregoing embodiments may be all or partially implemented by software, hardware, firmware, or any combination thereof. If the methods are implemented in the software, the methods may be all or partially implemented in a form of the computer program product. The computer program product includes one or more computer instructions. When the foregoing computer program instructions are loaded and executed on a computer, the procedures or functions described in the foregoing method embodiments are all or partially generated. The computer may be a general-purpose computer, a dedicated computer, a computer network, a network device, user equipment, or another programmable apparatus.

An embodiment of this application further provides a communication system, which may include the network device and the tag device in the foregoing embodiments.

The foregoing describes embodiments of this application with reference to the accompanying drawings. However, this application is not limited to the foregoing specific implementations. The foregoing specific implementations are merely examples, but are not limitative.

## Claims

1. A network device (100), comprising a processor (401), a memory (402), and a transceiver (403), wherein the processor, the memory, and the transceiver are coupled, the memory is configured to store program instructions, and the program instructions are configured to be executed by the processor;
the transceiver is configured to send an excitation signal to a tag device, wherein the excitation signal comprises a first excitation sub-signal and a second excitation sub-signal, the second excitation sub-signal and the first excitation sub-signal occupy a same time, and some symbols in the second excitation sub-signal have different phases from some symbols in the first excitation sub-signal;
the transceiver is further configured to receive an uplink signal, wherein the uplink signal is obtained after an uplink reflected signal sent by the tag device is transmitted through a channel, the uplink reflected signal comprises a first uplink reflected sub-signal and a second uplink reflected sub-signal, the first uplink reflected sub-signal is obtained by multiplying tag information by the first excitation sub-signal, and the second uplink reflected sub-signal is obtained by multiplying the tag information by the second excitation sub-signal; and
the processor is configured to perform diversity reception on the uplink signal in response to the received uplink signal, wherein the processor is specifically configured to:
perform frequency domain transformation on the uplink signal to obtain an uplink frequency domain sequence, wherein the uplink frequency domain sequence comprises a first frequency domain sequence and a second frequency domain sequence, the first frequency domain sequence is a frequency domain sequence corresponding to the first uplink reflected sub-signal, the second frequency domain sequence is a frequency domain sequence corresponding to the second uplink reflected sub-signal, and the second frequency domain sequence is a cyclic shift sequence of the first frequency domain sequence;
obtain a first frequency domain component, in the first frequency domain sequence, of the symbol in the tag information, and a second frequency domain component, in the second frequency domain sequence, of the symbol in the tag information; and
obtain a frequency domain component of the symbol in the tag information based on the first frequency domain component and the second frequency domain component, wherein the first frequency domain sequence *ŷ*_{*F*1}(*k*) is: ${\hat{y}}_{F 1} \left(k\right) = {h}_{f} \left(k\right) {\hat{x}}_{F 1} \left(k\right) ,$ wherein
*h_{f}*(*k*) is a channel response on the kth subcarrier, and *x̂*_{*F*1}(*k*) is a frequency domain sequence obtained by performing frequency domain transformation on the first uplink reflected sub-signal, wherein the second uplink reflected sub-signal *ŷ_{F2}*(*k*) is: ${\hat{y}}_{F 2} \left(k\right) = {h}_{f} \left(x\right) {\hat{x}}_{F 2} \left(k\right) = {h}_{f} \left(k\right) {\hat{x}}_{F 1} \left(mod\left(k-ΔN,N\right)\right) ,$ wherein
*h_{f}*(*k*) is the channel response on the kth subcarrier, *x̂*_{*F*2}(*k*) is a frequency domain sequence obtained by performing frequency domain transformation on the second uplink reflected sub-signal x(n) ${e}^{j \frac{2 πn}{N} Δ N} , {e}^{j \frac{2 πn}{N} Δ N}$ is a phase sequence corresponding to the second excitation sub-signal, *x*(*n*) is the tag information, *x̂*_{F1}(mod(*k* - Δ*N*, *N*)) indicates to perform an integer modulo operation on the frequency domain sequence *x̂*_{*F*1}(*k*) corresponding to the first uplink reflected sub-signal, N is a quantity of symbols comprised in the tag information *x*(*n*), *k* = 0, ... , *N* - 1, and Δ*N* is an integer greater than 0 and less than or equal to N-1.

2. The device according to claim 1, wherein the first excitation sub-signal *s*₁(*t*) is: ${s}_{1} \left(t\right) = cos \left(2πf\left(t-nT\right)+{ϕ}_{0}\right) ,$ and
the second excitation sub-signal *s*₂(*t*) is: ${s}_{2} \left(t\right) = cos \left(2πf\left(t-nT\right)+{ϕ}_{0}+{ϕ}_{n}\right) ,$ wherein
T is a time length occupied by a symbol in the tag information, N is a quantity of symbols in the tag information, n=0, ..., N-1, t=(n-1)T, ..., nT, f is a carrier frequency, *ϕ*₀ is an initial phase, and *ϕₙ* is a phase of the nth symbol of the second excitation sub-signal *s*₂(*t*).

3. The device according to claim 2, wherein
when n is an even number, *ϕₙ* = 0, and when n is an odd number, *ϕₙ* = *π*;
or
when n is an even number, *ϕₙ = π* , and when n is an odd number, *ϕₙ* = 0.

4. The device according to claim 2, wherein
when n=4k, *ϕₙ* = 0 ; when n=4k+1, ${ϕ}_{n} = \frac{π}{2}$; when n=4k+2, *ϕₙ* = *π* ; and when n=4k+3, ${ϕ}_{n} = \frac{3 π}{2}$, wherein $k = 0 , … , \frac{N}{4} .$

5. The device according to claim 2, wherein
when n=4k, *ϕₙ* = 0 ; when n=4k+1, ${ϕ}_{n} = \frac{3 π}{2}$; when n=4k+2, *ϕₙ = π*; when n=4k+3, ${ϕ}_{n} = \frac{π}{2}$, wherein $k = 0 , … , \frac{N}{4}$.

6. The device according to any one of claims 1 to 5, wherein
the transceiver is further configured to: send an indication signal to the tag device before sending the excitation signal, wherein the indication signal indicates the tag device to send the uplink reflected signal.

7. A tag device (200), comprising a transceiver, configured to receive an excitation signal sent by a network device (100), wherein the excitation signal comprises a first excitation sub-signal and a second excitation sub-signal, the second excitation sub-signal and the first excitation sub-signal occupy a same time, and some symbols in the second excitation sub-signal have different phases from some symbols in the first excitation sub-signal; and
the transceiver is configured to send an uplink reflected signal in response to the received excitation signal, wherein the uplink reflected signal comprises a first uplink reflected sub-signal and a second uplink reflected sub-signal, the first uplink reflected sub-signal is obtained by multiplying tag information by the first excitation sub-signal, and the second uplink reflected sub-signal is obtained by multiplying the tag information by the second excitation sub-signal, wherein the second excitation sub-signal comprises a phase sequence such that a frequency domain sequence of the second uplink reflected sub-signal is a cyclic shift of the frequency domain sequence of the first uplink reflected sub-signal.

8. The device according to claim 7, wherein the first excitation sub-signal *s*₁(*t*) is: ${s}_{1} \left(t\right) = cos \left(2πf\left(t-nT\right)+{ϕ}_{0}\right) ,$ and
the second excitation sub-signal *s*₂(*t*) is: ${s}_{2} \left(t\right) = cos \left(2πf\left(t-nT\right)+{ϕ}_{0}+{ϕ}_{n}\right) ,$ wherein
T is a time length occupied by a symbol in the tag information, N is a quantity of symbols in the tag information, n=0, ..., N-1, t=(n-1)T, ..., nT, f is a carrier frequency, *ϕ*₀ is an initial phase, and *ϕₙ* is a phase of the nth symbol of the second excitation sub-signal *s*₂(*t*).

9. The device according to claim 8, wherein
when n in the second excitation sub-signal *s*₂(*t*) is an even number, *ϕₙ* = 0, and when n is an odd number, *ϕₙ* = *π* ;
or
when n in the second excitation sub-signal *s*₂(*t*) is an even number, *ϕₙ = π*, and when n is an odd number, *ϕₙ* = 0.

10. The device according to claim 8, wherein
in the second excitation sub-signal *s*₂(*t*), when n=4k, *ϕₙ* = 0 , when n=4k+1, ${ϕ}_{n} = \frac{π}{2}$, when n=4k+2, *ϕₙ = π*, and when n=4k+3, ${ϕ}_{n} = \frac{3 π}{2}$, wherein $k = 0 , … , \frac{N}{4} .$

11. The device according to claim 8, wherein
in the second excitation sub-signal, when n=4k, *ϕₙ* = 0; when n=4k+1, ${ϕ}_{n} = \frac{3 π}{2}$; when n=4k+2, *ϕₙ = π*; and when n=4k+3, ${ϕ}_{n} = \frac{π}{2}$, wherein $k = 0 , … , \frac{N}{4} .$

12. A backscatter communication method, comprising:
sending (101), by a network device, an excitation signal to a tag device, wherein the excitation signal comprises a first excitation sub-signal and a second excitation sub-signal, the second excitation sub-signal and the first excitation sub-signal occupy a same time, and some symbols in the second excitation sub-signal have different phases from some symbols in the first excitation sub-signal;
receiving (104), by the network device, an uplink signal, wherein the uplink signal is obtained after an uplink reflected signal sent by the tag device is transmitted through a channel, the uplink reflected signal comprises a first uplink reflected sub-signal and a second uplink reflected sub-signal, the first uplink reflected sub-signal is obtained by multiplying tag information by the first excitation sub-signal, and the second uplink reflected sub-signal is obtained by multiplying the tag information by the second excitation sub-signal; and
performing (105), by the network device, diversity reception on the uplink signal in response to the received uplink signal, wherein the performing, by the network device, diversity reception on the uplink signal comprises:
performing frequency domain transformation on the uplink signal to obtain an uplink frequency domain sequence, wherein the uplink frequency domain sequence comprises a first frequency domain sequence and a second frequency domain sequence, the first frequency domain sequence is a frequency domain sequence corresponding to the first uplink reflected sub-signal, the second frequency domain sequence is a frequency domain sequence corresponding to the second uplink reflected sub-signal, and the second frequency domain sequence is a cyclic shift sequence of the first frequency domain sequence;
obtaining a first frequency domain component, in the first frequency domain sequence, of the symbol in the tag information, and a second frequency domain component, in the second frequency domain sequence, of the symbol in the tag information; and
obtaining a frequency domain component of the symbol in the tag information based on the first frequency domain component and the second frequency domain component,
wherein the first frequency domain sequence *ŷ*_{*F*1}(*k*) is: ${\hat{y}}_{F 1} \left(k\right) = {h}_{f} \left(k\right) {\hat{x}}_{F 1} \left(k\right) ,$ wherein
*h_{f}*(*k*) is a channel response on the kth subcarrier, and *x̂*_{*F*1}(*k*) is a frequency domain sequence obtained by performing frequency domain transformation on the first uplink reflected sub-signal,
*h_{f}*(*k*) wherein the second uplink reflected sub-signal *ŷ*_{*F*2}(*k*) is: ${\hat{y}}_{F 2} \left(k\right) = {h}_{f} \left(k\right) {\hat{x}}_{F 2} \left(k\right) = {h}_{f} \left(k\right) {\hat{x}}_{F 1} \left(mod\left(k-ΔN,N\right)\right) ,$ wherein
*h_{f}*(*k*) is the channel response on the kth subcarrier, *x̂*_{*F*2}(*k*) is a frequency domain sequence obtained by performing frequency domain transformation on the second uplink reflected sub-signal $x {\left(n\right)}^{{e}^{j \frac{2 πn}{N} Δ N} , {e}^{j \frac{2 πn}{N} Δ N}}$ is a phase sequence corresponding to the second excitation sub-signal, *x*(*n*) is the tag information, *x̂*_{*F*1}(mod(*k* - Δ*N*,*N*)) indicates to perform an integer modulo operation on a frequency domain sequence *x̂*_{*F*1}(*k*) corresponding to the first uplink reflected sub-signal, N is a quantity of symbols comprised in the tag information *x*(*n*) , *k* = 0,...,*N* - 1, and Δ*N* is an integer greater than 0 and less than or equal to N-1.

## Patentansprüche

1. Netzwerkvorrichtung (100), umfassend einen Prozessor (401), einen Speicher (402) und einen Transceiver (403), wobei der Prozessor, der Speicher und der Transceiver gekoppelt sind, der Speicher dazu konfiguriert ist, Programmanweisungen zu speichern und die Programmanweisungen dazu konfiguriert sind, durch den Prozessor ausgeführt zu werden;
der Transceiver dazu konfiguriert ist, ein Anregungssignal an eine Tag-Vorrichtung zu senden, wobei das Anregungssignal ein erstes Anregungsteilsignal und ein zweites Anregungsteilsignal umfasst, das zweite Anregungsteilsignal und das erste Anregungsteilsignal eine gleiche Zeit belegen und einige Symbole in dem zweiten Anregungsteilsignal andere Phasen aufweisen als einige Symbole in dem ersten Anregungsteilsignal;
der Transceiver ferner dazu konfiguriert ist, ein Uplink-Signal zu empfangen, wobei das Uplink-Signal erlangt wird, nachdem ein Uplink-Reflexionssignal, das durch die Tag-Vorrichtung gesendet wird, über einen Kanal übertragen wird, das Uplink-Reflexionssignal ein erstes Uplink-Reflexionsteilsignal und ein zweites Uplink-Reflexionsteilsignal umfasst, das erste Uplink-Reflexionsteilsignal durch Multiplizieren von Tag-Informationen mit dem ersten Anregungs-Teilsignal erlangt wird und das zweite Uplink-Reflexionsteilsignal durch Multiplizieren der Tag-Informationen mit dem zweiten Anregungs-Teilsignal erlangt wird; und
der Prozessor dazu konfiguriert ist, einen Diversity-Empfang auf dem Uplink-Signal als Reaktion auf das empfangene Uplink-Signal durchzuführen, wobei der Prozessor insbesondere zu Folgendem konfiguriert ist:
Durchführen einer Frequenzdomänentransformation auf dem Uplink-Signal, um eine Uplink-Frequenzdomänensequenz zu erlangen, wobei die Uplink-Frequenzdomänensequenz eine erste Frequenzdomänensequenz und eine zweite Frequenzdomänensequenz umfasst, die erste Frequenzdomänensequenz eine Frequenzdomänensequenz ist, die dem ersten Uplink-Reflexionsteilsignal entspricht, die zweite Frequenzdomänensequenz eine Frequenzdomänensequenz ist, die dem zweiten Uplink-Reflexionsteilsignal entspricht, und die zweite Frequenzdomänensequenz eine zyklische Verschiebungssequenz der ersten Frequenzdomänensequenz ist;
Erlangen einer ersten Frequenzdomänenkomponente, in der ersten Frequenzdomänensequenz, des Symbols in den Tag-Informationen und einer zweiten Frequenzdomänenkomponente, in der zweiten Frequenzdomänensequenz, des Symbols in den Tag-Informationen; und
Erlangen einer Frequenzdomänenkomponente des Symbols in den Tag-Informationen basierend auf der ersten Frequenzdomänenkomponente und der zweiten Frequenzdomänenkomponente, wobei die erste Frequenzdomänensequenz *ŷ*_{*F*1}(*k*) wie folgt lautet: ${\hat{y}}_{F 1} \left(k\right) = {h}_{f} \left(k\right) {\hat{x}}_{F 1} \left(k\right) ,$ wobei
*h_{f}*(*k*) eine Kanalantwort auf dem k-ten Unterträger ist und *x̂*_{*F*1}(*k*) eine Frequenzdomänensequenz ist, die durch Durchführen einer Frequenzdomänentransformation auf dem ersten Uplink-Reflexionsteilsignal erlangt wird, wobei das zweite Uplink-Reflexionsteilsignal *ŷ*_{*F*2}(*k*) wie folgt lautet:
*ŷ*_{*F*2}(*k*)*=h_{f}*(*k*) x̂_{*F*2}(*k*)*=h_{f}*(*k*) x̂_{*F*1}(mod(*k-*Δ*N,N*)), wobei
*h_{f}* (*k*) die Kanalantwort auf dem k-ten Unterträger ist, *x̂*_{*F*2}(*k*) eine Frequenzdomänensequenz ist, die durch Durchführen einer Frequenzdomänentransformation auf dem zweiten Uplink-Reflexionsteilsignal $x \left(n\right) {e}^{j \frac{2 πn}{N} Δ N}$ erlangt wird, ${e}^{j \frac{2 πn}{N} Δ N}$ eine Phasensequenz ist, die dem zweiten Anregungsteilsignal entspricht, *x(n)* die Tag-Informationen sind, x̂_{*F*1}(mod(*k* - Δ*N,N*)) angibt, eine ganzzahlige Modulo-Operation an der Frequenzdomänensequenz x̂_{*F*1}(*k*) durchzuführen, die dem ersten Uplink-Reflexionsteilsignal entspricht, N eine Anzahl von Symbolen ist, die in den Tag-Informationen *x*(*n*) umfasst sind, *k* = 0, ..., *N*-1, und Δ*N* eine Ganzzahl größer als 0 und kleiner oder gleich N-1 ist.

2. Vorrichtung nach Anspruch 1, wobei das erste Anregungsteilsignal *s*₁(*t*) wie folgt lautet: ${s}_{1} \left(t\right) = cos \left(2π f\left(t-nT\right)+{ϕ}_{0}\right)$ und
das zweite Anregungsteilsignal *s*₂(*t*) wie folgt lautet:
*s*₂(*t*) = cos(2*π f*(*t*-*nT*)+*ϕ*₀ + *ϕₙ*), wobei
T eine Zeitdauer ist, die durch ein Symbol in den Tag-Informationen belegt ist, N eine Anzahl von Symbolen in den Tag-Informationen ist, n=0, ..., N-1, t=(n-1)T, ..., nT, f eine Trägerfrequenz ist, *ϕ*₀ eine Anfangsphase ist und *ϕₙ* eine Phase des n-ten Symbols des zweiten Anregungsteilsignals *s*₂(*t*) ist.

3. Vorrichtung nach Anspruch 2, wobei
wenn n eine gerade Zahl ist, *ϕₙ* = 0, und wenn n eine ungerade Zahl ist, *ϕₙ* = *π*;
oder
wenn n eine gerade Zahl ist, *ϕₙ* = *π*, und wenn n eine ungerade Zahl ist, *ϕₙ* = 0.

4. Vorrichtung nach Anspruch 2, wobei
wenn n=4k, *ϕₙ* = 0; wenn n=4k+1, ${ϕ}_{n} = \frac{π}{2}$; wenn n=4k+2, *ϕₙ* = *π;* und wenn n=4k+3, ${ϕ}_{n} = \frac{3 π}{2}$,
wobei $k = 0 , … , \frac{N}{4} .$

5. Vorrichtung nach Anspruch 2, wobei
wenn n=4k, *ϕₙ* = 0; wenn n=4k+1, ${ϕ}_{n} = \frac{3 π}{2}$; wenn n=4k+2, *ϕₙ* = *π;* wenn n=4k+3, ${ϕ}_{n} = \frac{π}{2}$*,* wobei $k = 0 , … , \frac{N}{4} .$

6. Vorrichtung nach einem der Ansprüche 1 bis 5, wobei
der Transceiver ferner zu Folgendem konfiguriert ist: Senden eines Angabesignals an die Tag-Vorrichtung vor dem Senden des Anregungssignals, wobei das Angabesignal der Tag-Vorrichtung angibt, das Uplink-Reflexionssignal zu senden.

7. Tag-Vorrichtung (200), umfassend einen Transceiver, der dazu konfiguriert ist, ein Anregungssignal zu empfangen, das durch eine Netzwerkvorrichtung (100) gesendet wird, wobei das Anregungssignal ein erstes Anregungsteilsignal und ein zweites Anregungsteilsignal umfasst, das zweite Anregungsteilsignal und das erste Anregungsteilsignal eine gleiche Zeit belegen und einige Symbole in dem zweiten Anregungsteilsignal andere Phasen aufweisen als einige Symbole in dem ersten Anregungsteilsignal; und
der Transceiver dazu konfiguriert ist, ein Uplink-Reflexionssignal als Reaktion auf das empfangene Anregungssignal zu senden, wobei das Uplink-Reflexionssignal ein erstes Uplink-Reflexionsteilsignal und ein zweites Uplink-Reflexionsteilsignal umfasst, wobei das erste Uplink-Reflexionsteilsignal durch Multiplizieren von Tag-Informationen mit dem ersten Anregungsteilsignal erlangt wird, und das zweite Uplink-Reflexionsteilsignal durch Multiplizieren der Tag-Informationen mit dem zweiten Anregungsteilsignal erlangt wird, wobei das zweite Anregungsteilsignal eine Phasensequenz umfasst, so dass eine Frequenzdomänensequenz des zweiten Uplink-Reflexionsteilsignals eine zyklische Verschiebung der Frequenzdomänensequenz des ersten Uplink-Reflexionsteilsignals ist.

8. Vorrichtung nach Anspruch 7, wobei das erste Anregungsteilsignal *s*₁(*t*) wie folgt lautet:
*s*₁(*t*)=cos(2*π f*(*t*-*nT*)+*ϕ*₀), und
das zweite Anregungsteilsignal *s*₂(*t*) wie folgt lautet: ${s}_{2} \left(t\right) = cos \left(2π f\left(t-nT\right)+{ϕ}_{0}+{ϕ}_{n}\right) ,$ wobei
T eine Zeitdauer ist, die durch ein Symbol in den Tag-Informationen belegt ist, N eine Anzahl von Symbolen in den Tag-Informationen ist, n=0, ..., N-1, t=(n-1)T, ..., nT, f eine Trägerfrequenz ist, *ϕ*₀ eine Anfangsphase ist und *ϕₙ* eine Phase des n-ten Symbols des zweiten Anregungsteilsignals *s*₂(*t*) ist.

9. Vorrichtung nach Anspruch 8, wobei
wenn n in dem zweiten Anregungsteilsignal *s*₂(*t*) eine gerade Zahl ist, *ϕₙ* = 0, und wenn n eine ungerade Zahl ist, *ϕₙ* = *π;*
oder
wenn n in dem zweiten Anregungsteilsignal *s*₂(*t*) eine gerade Zahl ist, *ϕₙ = π*, und wenn n eine ungerade Zahl ist, *ϕₙ* = 0.

10. Vorrichtung nach Anspruch 8, wobei
in dem zweiten Anregungsteilsignal *s*₂(*t*), wenn n=4k, *ϕ*₀ = 0, wenn n=4k+1, ${ϕ}_{n} = \frac{π}{2}$, wenn n=4k+2, *ϕₙ* = *π,* und wenn n=4k+3, ${ϕ}_{n} = \frac{3 π}{2}$, wobei $k = 0 , … , \frac{N}{4} .$.

11. Vorrichtung nach Anspruch 8, wobei
in dem zweiten Anregungsteilsignal, wenn n=4k, *ϕₙ* = 0; wenn n=4k+1, ${ϕ}_{n} = \frac{3 π}{2}$; wenn n=4k+2, *ϕₙ* = *π*;
und wenn n=4k+3, ${ϕ}_{n} = \frac{π}{2}$, wobei $k = 0 , … , \frac{N}{4} .$

12. Backscatter-Kommunikationsverfahren, umfassend:
Senden (101), durch eine Netzwerkvorrichtung, eines Anregungssignals an eine Tag-Vorrichtung, wobei das Anregungssignal ein erstes Anregungsteilsignal und ein zweites Anregungsteilsignal umfasst, das zweite Anregungsteilsignal und das erste Anregungsteilsignal eine gleiche Zeit belegen und einige Symbole in dem zweiten Anregungsteilsignal andere Phasen aufweisen als einige Symbole in dem ersten Anregungsteilsignal;
Empfangen (104), durch die Netzwerkvorrichtung, eines Uplink-Signals, wobei das Uplink-Signal erlangt wird, nachdem ein Uplink-Reflexionssignal, das durch die Tag-Vorrichtung gesendet wird, über einen Kanal übertragen wird, das Uplink-Reflexionssignal ein erstes Uplink-Reflexionsteilsignal und ein zweites Uplink-Reflexionsteilsignal umfasst, das erste Uplink-Reflexionsteilsignal durch Multiplizieren von Tag-Informationen mit dem ersten Anregungs-Teilsignal erlangt wird und das zweite Uplink-Reflexionsteilsignal durch Multiplizieren der Tag-Informationen mit dem zweiten Anregungs-Teilsignal erlangt wird; und
Durchführen (105), durch die Netzwerkvorrichtung, eines Diversity-Empfangs auf dem Uplink-Signal als Reaktion auf das empfangene Uplink-Signal, wobei das Durchführen, durch die Netzwerkvorrichtung, des Diversity-Empfangs auf dem Uplink-Signal Folgendes umfasst:
Durchführen einer Frequenzdomänentransformation auf dem Uplink-Signal, um eine Uplink-Frequenzdomänensequenz zu erlangen,
wobei die Uplink-Frequenzdomänensequenz eine erste Frequenzdomänensequenz und eine zweite Frequenzdomänensequenz umfasst, die erste Frequenzdomänensequenz eine Frequenzdomänensequenz ist, die dem ersten Uplink-Reflexionsteilsignal entspricht, die zweite Frequenzdomänensequenz eine Frequenzdomänensequenz ist, die dem zweiten Uplink-Reflexionsteilsignal entspricht, und die zweite Frequenzdomänensequenz eine zyklische Verschiebungssequenz der ersten Frequenzdomänensequenz ist;
Erlangen einer ersten Frequenzdomänenkomponente, in der ersten Frequenzdomänensequenz, des Symbols in den Tag-Informationen und einer zweiten Frequenzdomänenkomponente, in der zweiten Frequenzdomänensequenz, des Symbols in den Tag-Informationen; und
Erlangen einer Frequenzdomänenkomponente des Symbols in den Tag-Informationen basierend auf der ersten Frequenzdomänenkomponente und der zweiten Frequenzdomänenkomponente,
wobei die erste Frequenzdomänensequenz *ŷ*_{*F*1}(*k*) lautet: ${\hat{y}}_{F 1} \left(k\right) = {h}_{f} \left(k\right) {\hat{x}}_{F 1} \left(k\right) ,$ wobei
*h_{f}*(*k*) eine Kanalantwort auf dem k-ten Unterträger ist und x̂_{*F*1}(*k*) eine Frequenzdomänensequenz ist, die durch Durchführen einer Frequenzdomänentransformation auf dem ersten Uplink-Reflexionsteilsignal erlangt wird,
*h_{f}*(*k*) wobei das zweite Uplink-Reflexionsteilsignal *ŷ*_{*F*2}(*k*) wie folgt lautet: ${\hat{y}}_{F 2} \left(k\right) = {h}_{f} \left(k\right) {\hat{x}}_{F 2} \left(k\right) = {h}_{f} \left(k\right) {\hat{x}}_{F 1} \left(mod\left(k-ΔN,N\right)\right) ,$ wobei
*h_{f}*(*k*) die Kanalantwort auf dem k-ten Unterträger ist, x̂_{*F*2}(*k*) eine Frequenzdomänensequenz ist, die durch Durchführen einer Frequenzdomänentransformation auf dem zweiten Uplink-Reflexionsteilsignal x(n) ${e}^{j \frac{2 πn}{N} Δ N}$ erlangt wird, ${e}^{j \frac{2 πn}{N} Δ N}$ eine Phasensequenz ist, die dem zweiten Anregungsteilsignal entspricht, *x*(*n*) die Tag-Informationen sind, x̂_{*F*1}(mod(*k*-Δ*N,N*)) angibt, eine ganzzahlige Modulo-Operation an einer Frequenzdomänensequenz x̂_{*F*1}(*k*) durchzuführen, die dem ersten Uplink-Reflexionsteilsignal entspricht, N eine Anzahl von Symbolen ist, die in den Tag-Informationen *x*(*n*) umfasst sind, *k* = 0, ..., *N* - 1, und Δ*N* eine Ganzzahl größer als 0 und kleiner oder gleich N-1 ist.

## Revendications

1. Dispositif réseau (100), comprenant un processeur (401), une mémoire (402) et un émetteur-récepteur (403), dans lequel le processeur, la mémoire, et l'émetteur-récepteur sont couplés, la mémoire est configurée pour stocker des instructions de programme, et les instructions de programme sont configurées pour être exécutées par le processeur ;
l'émetteur-récepteur est configuré pour envoyer un signal d'excitation à un dispositif d'étiquette, dans lequel le signal d'excitation comprend un premier sous-signal d'excitation et un second sous-signal d'excitation, le second sous-signal d'excitation et le premier sous-signal d'excitation occupent un même temps, et certains symboles dans le second sous-signal d'excitation ont des phases différentes de certains symboles dans le premier sous-signal d'excitation ;
l'émetteur-récepteur est en outre configuré pour recevoir un signal de liaison montante, dans lequel le signal de liaison montante est obtenu après qu'un signal réfléchi de liaison montante envoyé par le dispositif d'étiquette est transmis via un canal, le signal réfléchi de liaison montante comprend un premier sous-signal réfléchi de liaison montante et un second sous-signal réfléchi de liaison montante, le premier sous-signal réfléchi de liaison montante est obtenu en multipliant les informations d'étiquette par le premier sous-signal d'excitation, et le second sous-signal réfléchi de liaison montante est obtenu en multipliant les informations d'étiquette par le second sous-signal d'excitation ; et
le processeur est configuré pour réaliser une réception en diversité sur le signal de liaison montante en réponse au signal de liaison montante reçu, dans lequel le processeur est spécifiquement configuré pour :
réaliser une transformation de domaine de fréquence sur le signal de liaison montante pour obtenir une séquence de domaine de fréquence de liaison montante, dans lequel la séquence de domaine de fréquence de liaison montante comprend une première séquence de domaine de fréquence et une seconde séquence de domaine de fréquence, la première séquence de domaine de fréquence est une séquence de domaine de fréquence correspondant au premier sous-signal réfléchi de liaison montante, la seconde séquence de domaine de fréquence est une séquence de domaine de fréquence correspondant au second sous-signal réfléchi de liaison montante, et la seconde séquence de domaine de fréquence est une séquence de décalage cyclique de la première séquence de domaine de fréquence ;
obtenir une première composante de domaine de fréquence, dans la première séquence de domaine de fréquence, du symbole dans les informations d'étiquette, et une seconde composante de domaine de fréquence, dans la seconde séquence de domaine de fréquence, du symbole dans les informations d'étiquette ; et
obtenir une composante de domaine de fréquence du symbole dans les informations d'étiquette sur la base de la première composante de domaine de fréquence et de la seconde composante de domaine de fréquence, dans lequel la première séquence de domaine de fréquence *ŷ*_{*F*1}(*k*) est : ${\hat{y}}_{F 1} \left(k\right) = {h}_{f} \left(k\right) {{x}^{∧}}_{F 1} \left(k\right) ,$ dans lequel
*h_{f}*(*k*) est une réponse de canal sur la kème sous-porteuse, et *x^*_{*F*1}(*k*) est une séquence de domaine de fréquence obtenue en réalisant une transformation de domaine de fréquence sur le premier sous-signal réfléchi de liaison montante, dans lequel le second sous-signal réfléchi de liaison montante *ŷ*_{*F*2}(*k*) est : ${\hat{y}}_{F 2} \left(k\right) = {h}_{f} \left(k\right) {{x}^{∧}}_{F 2} \left(k\right) = {h}_{f} \left(k\right) {{x}^{∧}}_{F 1} \left(mod\left(k-ΔN,N\right)\right) ,$ dans lequel
*h_{f}*(*k*) est la réponse de canal sur la kème sous-porteuse, *x^*_{*F*2}(*k*) est une séquence de domaine de fréquence obtenue en réalisant une transformation de domaine de fréquence sur le second sous-signal réfléchi de liaison montante x(n) ${e}^{j \frac{2 πn}{N} Δ N} , {e}^{j \frac{2 πn}{N} Δ N}$ est une séquence de phase correspondant au second sous-signal d'excitation, *x*(*n*) est l'information d'étiquette, *x^*_{*F*1}(mod(*k* - Δ*N,N*)) indique de réaliser une opération modulo entière sur la séquence de domaine de fréquence *x^*_{*F*1}(*k*) correspondant au premier sous-signal réfléchi de liaison montante, N est une quantité de symboles compris dans les informations d'étiquette *x*(*n*), *k* = 0, ..., *N*-1, et Δ*N* est un entier supérieur à 0 et inférieur ou égal à N-1.

2. Dispositif selon la revendication 1, dans lequel le premier sous-signal d'excitation *s*₁(*t*) est : ${s}_{1} \left(t\right) = cos \left(2π f\left(t-nT\right)+{ϕ}_{0}\right) ,$ et
le second sous-signal d'excitation *s*₂(*t*) est :
*s*₂(*t*) = cos(2*π f*(*t-nT*)+*ϕ*₀ + *ϕₙ*), dans lequel
T est une durée occupée par un symbole dans les informations d'étiquette, N est une quantité de symboles dans les informations d'étiquette, n=0, ..., N-1, t=(n-1)T, ..., nT, f est une fréquence porteuse, *ϕ*₀ est une phase initiale, et *ϕₙ* est une phase du nème symbole du second sous-signal d'excitation *s*₂(*t*).

3. Dispositif selon la revendication 2, dans lequel
lorsque n est un nombre pair, *ϕₙ* = 0, et lorsque n est un nombre impair, *ϕₙ* = *π* ;
ou
lorsque n est un nombre pair, *ϕₙ* = *π*, et lorsque n est un nombre impair, *ϕₙ* = 0.

4. Procédé selon la revendication 2, dans lequel
lorsque n=4k, *ϕₙ* = 0 ; lorsque n=4k+1, ${ϕ}_{n} = \frac{π}{2}$ ; lorsque n=4k+2, *ϕₙ* = *π* ; et lorsque n=4k+3, ${ϕ}_{n} = \frac{3 π}{2}$*,*
dans lequel $k = 0 , … , \frac{N}{4} .$

5. Procédé selon la revendication 2, dans lequel
lorsque n=4k, *ϕₙ* = 0 ; lorsque n=4k+1, ${ϕ}_{n} = \frac{3 π}{2}$; lorsque n=4k+2, *ϕₙ = π* ; lorsque n=4k+3, ${ϕ}_{n} = \frac{π}{2}$, dans lequel $k = 0 , … , \frac{N}{4} .$

6. Dispositif selon l'une quelconque des revendications 1 à 5, dans lequel
l'émetteur-récepteur est en outre configuré pour : envoyer un signal d'indication au dispositif d'étiquette avant d'envoyer le signal d'excitation, dans lequel le signal d'indication indique au dispositif d'étiquette d'envoyer le signal réfléchi de liaison montante.

7. Dispositif d'étiquette (200), comprenant un émetteur-récepteur, configuré pour recevoir un signal d'excitation envoyé par un dispositif réseau (100), dans lequel le signal d'excitation comprend un premier sous-signal d'excitation et un second sous-signal d'excitation, le second sous-signal d'excitation et le premier sous-signal d'excitation occupent un même temps, et certains symboles dans le second sous-signal d'excitation ont des phases différentes de certains symboles dans le premier sous-signal d'excitation ; et
l'émetteur-récepteur est configuré pour envoyer un signal réfléchi de liaison montante en réponse au signal d'excitation reçu, dans lequel le signal réfléchi de liaison montante comprend un premier sous-signal réfléchi de liaison montante et un second sous-signal réfléchi de liaison montante, le premier sous-signal réfléchi de liaison montante est obtenu en multipliant des informations d'étiquette par le premier sous-signal d'excitation, et le second sous-signal réfléchi de liaison montante est obtenu en multipliant les informations d'étiquette par le second sous-signal d'excitation, dans lequel le second sous-signal d'excitation comprend une séquence de phase telle qu'une séquence de domaine de fréquence du second sous-signal réfléchi de liaison montante est un décalage cyclique de la séquence de domaine de fréquence du premier sous-signal réfléchi de liaison montante.

8. Dispositif selon la revendication 7, dans lequel le premier sous-signal d'excitation *s*₁(*t*) est : ${s}_{1} \left(t\right) = cos \left(2π f\left(t-nT\right)+{ϕ}_{0}\right) ,$ et
le second sous-signal d'excitation *s*₂(*t*) est : ${s}_{2} \left(t\right) = cos \left(2π f\left(t-nT\right)+{ϕ}_{0}+{ϕ}_{n}\right) ,$ dans lequel
T est une durée occupée par un symbole dans les informations d'étiquette, N est une quantité de symboles dans les informations d'étiquette, n=0, ..., N-1, t=(n-1)T, ..., nT, f est une fréquence porteuse, *ϕ*₀ est une phase initiale, et *ϕₙ* est une phase du nème symbole du second sous-signal d'excitation *s*₂(*t*).

9. Dispositif selon la revendication 8, dans lequel
lorsque n dans le second sous-signal d'excitation *s*₂(*t*) est un nombre pair, *ϕₙ* = 0, et lorsque n est un nombre impair, *ϕₙ* = *π* ; ou
lorsque n dans le second sous-signal d'excitation *s*₂(*t*) est un nombre pair, *ϕₙ = π*, et lorsque n est un nombre impair, *ϕₙ* = 0.

10. Dispositif selon la revendication 8, dans lequel
dans le second sous-signal d'excitation *s*₂(*t*), lorsque n=4k, *ϕₙ* = 0, lorsque n=4k+1, ${ϕ}_{n} = \frac{π}{2}$, lorsque n=4k+2, *ϕₙ* = *π*, et lorsque n=4k+3, ${ϕ}_{n} = \frac{3 π}{2}$, dans lequel $k = 0 , … , \frac{N}{4} .$

11. Dispositif selon la revendication 8, dans lequel
dans le second sous-signal d'excitation, lorsque n=4k, *ϕₙ* = 0 ; lorsque n=4k+1, ${ϕ}_{n} = \frac{3 π}{2}$ ; lorsque n=4k+2, *ϕₙ = π ;*
et lorsque n=4k+3, ${ϕ}_{n} = \frac{π}{2}$, dans lequel $k = 0 , … , \frac{N}{4} .$

12. Procédé de communication par rétrodiffusion, comprenant :
l'envoi (101), par un dispositif réseau, d'un signal d'excitation à un dispositif d'étiquette, dans lequel le signal d'excitation comprend un premier sous-signal d'excitation et un second sous-signal d'excitation, le second sous-signal d'excitation et le premier sous-signal d'excitation occupent un même temps, et certains symboles dans le second sous-signal d'excitation ont des phases différentes de certains symboles dans le premier sous-signal d'excitation ;
la réception (104), par le dispositif réseau, d'un signal de liaison montante, dans lequel le signal de liaison montante est obtenu après qu'un signal réfléchi de liaison montante envoyé par le dispositif d'étiquette est transmis via un canal, le signal réfléchi de liaison montante comprend un premier sous-signal réfléchi de liaison montante et un second sous-signal réfléchi de liaison montante, le premier sous-signal réfléchi de liaison montante est obtenu en multipliant les informations d'étiquette par le premier sous-signal d'excitation, et le second sous-signal réfléchi de liaison montante est obtenu en multipliant les informations d'étiquette par le second sous-signal d'excitation ; et
la réalisation (105), par le dispositif réseau, d'une réception en diversité sur le signal de liaison montante en réponse au signal de liaison montante reçu, dans lequel la réalisation, par le dispositif réseau, d'une réception en diversité sur le signal de liaison montante comprend :
la réalisation d'une transformation de domaine de fréquence sur le signal de liaison montante pour obtenir une séquence de domaine de fréquence de liaison montante,
dans lequel la séquence de domaine de fréquence de liaison montante comprend une première séquence de domaine de fréquence et une seconde séquence de domaine de fréquence, la première séquence de domaine de fréquence est une séquence de domaine de fréquence correspondant au premier sous-signal réfléchi de liaison montante, la seconde séquence de domaine de fréquence est une séquence de domaine de fréquence correspondant au second sous-signal réfléchi de liaison montante, et la seconde séquence de domaine de fréquence est une séquence de décalage cyclique de la première séquence de domaine de fréquence ;
l'obtention d'une première composante de domaine de fréquence, dans la première séquence de domaine de fréquence, du symbole dans les informations d'étiquette, et une seconde composante de domaine de fréquence, dans la seconde séquence de domaine de fréquence, du symbole dans les informations d'étiquette ; et
l'obtention d'une composante de domaine de fréquence du symbole dans les informations d'étiquette sur la base de la première composante de domaine de fréquence et de la seconde composante de domaine de fréquence,
dans lequel la première séquence de domaine de fréquence *ŷ*_{*F*1}(*k*) est : ${\hat{y}}_{F 1} \left(k\right) = {h}_{f} \left(k\right) {{x}^{∧}}_{{F}_{1}} \left(k\right) ,$ dans lequel
*h_{f}*(*k*) est une réponse de canal sur la kème sous-porteuse, et *x^*_{*F*1}(*k*) est une séquence de domaine de fréquence obtenue en réalisant une transformation de domaine de fréquence sur le premier sous-signal réfléchi de liaison montante,
*h_{f}*(*k*) dans lequel le second sous-signal réfléchi de liaison montante *ŷ*_{*F*2}(*k*) est : ${\hat{y}}_{F 2} \left(k\right) = {h}_{f} \left(k\right) {{x}^{∧}}_{{F}_{2}} \left(k\right) = {h}_{f} \left(k\right) {{x}^{∧}}_{F 1} \left(mod\left(k-ΔN,N\right)\right) ,$ dans lequel
*h_{f}*(*k*) est la réponse de canal sur la kème sous-porteuse, *x^*_{*F*2}(*k*) est une séquence de domaine de fréquence obtenue en réalisant une transformation de domaine de fréquence sur le second sous-signal réfléchi de liaison montante x(n) ${e}^{j \frac{2 πn}{N} Δ N} , {e}^{j \frac{2 πn}{N} Δ N}$ est une séquence de phase correspondant au second sous-signal d'excitation, *x(n)* est l'information d'étiquette, *x^*_{*F*1}(mod(*k-*Δ*N,N*)) indique de réaliser une opération modulo entière sur une séquence de domaine de fréquence *x^*_{*F*1}(*k*) correspondant au premier sous-signal réfléchi de liaison montante, N est une quantité de symboles compris dans les informations d'étiquette *x(n), k* = 0, ..., *N*-1, et Δ*N* est un entier supérieur à 0 et inférieur ou égal à N-1.
